# EUROPÄISCHE PATENTSCHRIFT

(11) **EP 3 781 413 B1**
(45) Veröffentlichungstag und Bekanntmachung des Hinweises auf die Patenterteilung: **13.08.2025**
(21) Anmeldenummer: 19721974.4
(22) Anmeldetag: 18.04.2019
(51) Int. Cl.: B60B 3/04, B60B 23/10

(54) **MEHRTEILIGES FAHRZEUGRAD MIT EINER DICHTUNG**
MULTI-PART VEHICLE WHEEL WITH A SEAL
ROUE DE VÉHICULE À PLUSIEURS PARTIES POURVUE D'UN JOINT D'ÉTANCHÉITÉ

(30) Priorität: 20.04.2018 DE 102018109562
(43) Veröffentlichungstag der Anmeldung: 24.02.2021
(73) Patentinhaber: Action Composites GmbH, 4910 Ried im Innkreis (AT)
(72) Erfinder: WERNER, Jens, 01723 Wilsdruff STT Kesselsdorf (DE); FRANKE, Florian, 01723 Wilsdruff STT Kesselsdorf (DE); KÖHLER, Christian, 01723 Wilsdruff STT Kesselsdorf (DE); MÄKE, Sandro, 01723 Wilsdruff STT Kesselsdorf (DE); DRESSLER, Michael, 01723 Wilsdruff STT Kesselsdorf (DE); FRANKE, Michael, 01723 Wilsdruff STT Kesselsdorf (DE)
(74) Vertreter: Kailuweit & Uhlemann Patentanwälte Partnerschaft mbB
(86) Internationale Anmeldenummer: PCT/DE2019/100370
(87) Internationale Veröffentlichungsnummer: WO 2019/201399

(56) Entgegenhaltungen:
- EP-A1- 2 610 070
- EP-A1- 3 228 473
- WO-A1-2014/058313
- WO-A1-2016/066769

## Beschreibung

Die Erfindung betrifft ein Fahrzeugrad, das eine Radscheibe, eine Radfelge und mindestens ein die Radscheibe und die Radfelge verbindendes Verbindungselement aufweist, wobei das Verbindungselement durch einen Durchgang in der Radfelge geführt und in der Radscheibe gefügt ist. Die Radfelge ist für eine schlauchlose Bereifung bestimmt. Zur hermetischen Abdichtung des Durchganges der Radfelge gegenüber einer Reifenkammer ist eine Dichtung vorgesehen.

Die Reifenkammer bezeichnet den Raum, der von der Radfelge und dem aufgezogenen Reifen eingeschlossen ist und der gegen die Umgebung abgedichtet werden muss.

Die Radscheibe kann eine Schüsselform, eine Scheibenform oder eine Sternform aufweisen.

Die Radscheibe und die Radfelge werden mittels des Verbindungselements form- und / oder kraftschlüssig verbunden.

Sind mehrere Verbindungselemente zur Verbindung von Radfelge und Radscheibe vorgesehen, können diese durch beispielsweise entlang des Umfangs der Radfelge angeordnete Durchgänge geführt sein und jeweils in einen der in der Radscheibe korrespondierend angeordneten Fügegänge eingreifen.

Als Verbindungselemente können Niete, Schrauben oder Schraubbolzen verwendet sein. Bei der Verbindung durch beispielsweise eine Schraube liegt der Schraubenkopf in der Regel am umlaufenden Rand an der Felgenaußenseite des Durchganges der Radfelge an, wobei ein Außengewinde der Schraube in ein Innengewinde eines Fügeganges der Radscheibe eingreift.

Bei derartigen Rädern besteht die Schwierigkeit darin, diese Durchgänge durch die Radfelge, die mit einer kraftschlüssigen Verbindung zur Befestigung der Radscheibe an der Radfelge belegt sind, so abzudichten, dass aus der Reifenkammer keine Luft zur Umgebung hin entweichen kann.

Aus der Druckschrift EP 1 858 715 B1 ist ein Fahrzeugrad bekannt, das aus einer Felge und einer Radschüssel beziehungsweise einer Speicheneinheit besteht, wobei Verbindungselemente durch die Felge geführt und in der Radschüssel beziehungsweise Speicheneinheit aufgenommen sind. Die Abdichtung der Durchführung für die Verbindungselemente erfolgt in der Weise, dass die Verbindungselemente eine Dichtung aufweisen.

Diese Dichtung ist zwischen dem Verbindungselement und der Felgenaußenseite der Radfelge bzw. im Durchgang der Radfelge angeordnet und somit in die Kraftübertragung der kraftschlüssigen Verbindung eingebunden, was die Gefahr einer Beschädigung der Dichtung im Dauerbetrieb des Kraftfahrzeugrades in sich birgt.

Weitere Gefahr der Beschädigung der Dichtung besteht durch die Relativbewegung des Verbindungselementes während des Fügevorganges.

Aus der EP 1 619 043 A2 und der US 6,019,149 sind Speichenräder bekannt, bei denen die Abdichtung der Nippel-Speichen-Durchführung durch die Felge mittels felgenaußenseitig über dem Verbindungselement angeordneter Dichtungselemente erfolgt. Diese Abdichtungen benötigen jeweils Bauraum für die Dichtung oberhalb des Verbindungselementes.

Nachteilig ist insbesondere bei der Lösung nach der US 6,019,149, dass das Auf- bzw. Abziehen des Reifens erschwert und die Dichtung hierbei beschädigt werden kann.

Bei der Ausführung nach der EP 1 619 043 A2 wird der überstehende Bauraum dadurch verringert, dass das Verbindungselement in die Radfelge eingelassen ist, was jedoch den Querschnitt der Radfelge lokal verjüngt und damit die Belastbarkeit der Radfelge gefährlich mindert. Die WO2014058313A zeigt ebenfalls ein Fahrzeugrad des Standes der Technik.

Der Erfindung liegt die Aufgabe zugrunde, ein Fahrzeugrad bereitzustellen, das die Nachteile von Fahrzeugrädern gemäß dem geschilderten Stand der Technik beseitigt.

Die Erfindung soll für ein Fahrzeugrad, das eine Verbindung von Radscheibe und Radfelge nach vorstehender Art umfasst, eine zuverlässige, betriebssichere und kostengünstige Abdichtung des Durchgangs durch die Radfelge bereitstellen. Dabei soll durch die Dichtung die Festigkeit und Zuverlässigkeit der Verbindung zwischen Radfelge und Radscheibe nicht beeinträchtigt werden und ebenso eine Beschädigung der Dichtung bei der Montage und während des Fahrzeugbetriebs vermieden werden. Weiterhin soll durch die Ausführung der Dichtung das Auf- und Abziehen der Bereifung nicht behindert werden und eine Beschädigung der Dichtung hierbei ebenfalls vermieden werden.

Die Aufgabe wird durch ein Fahrzeugrad gemäß Anspruch 1 gelöst.

Das erfindungsgemässe Fahrzeugrad hat die Merkmale des Anspruchs 1. Weitere Ausführungen der Erfindung sind in den Unteransprüchen dargestellt.

Vorzugsweise verfügt der äußere, radiale Umfang der Radscheibe über eine oder mehrere solcher Anschlussflächen, während ein radialer Umfang der Felgeninnenseite der Radfelge über dazu passende, kommunizierende Anschlussflächen zum Anschluss der jeweiligen Radscheibe an die Radfelge verfügt.

Der Anschlussbereich der Radscheibe kann beispielsweise an einer radial umlaufenden Radaußenfläche (Radkranz) oder an mehreren einzelnen Endflächen der Radspeichen ausgebildet sein.

Die Anschlussfläche(n) der Radscheibe kann/können radial nach außen bis axial seitwärts nach außen gerichtet sein, wobei die Anschlussfläche(n) der Radfelge entsprechend radial nach innen bzw. axial seitwärts gerichtet sein kann/können.

Die Anschlussfläche(n) der Radscheibe und die Anschlussfläche(n) der Radfelge sind im montierten Zustand des Fahrzeugrades im Wesentlichen einander zugewandt.

Die Dichtung ist weder auf der Felgenaußenseite noch im Durchgang der Radfelge, sondern ausschließlich zwischen dem Anschlussbereich der Radfelge und dem Anschlussbereich der Radscheibe, insbesondere zwischen deren Kontaktflächen angeordnet, und zwar so, dass sie keinerlei Kontakt - weder unmittelbar noch mittelbar - mit dem Verbindungselement eingeht.

Vorzugsweise sind mehrere Dichtungen zwischen wenigstens dem Anschlussbereich der Radscheibe und dem Anschlussbereich der Radfelge angeordnet.

Bevorzugt ist/sind die Dichtung(en) zwischen wenigstens einer Anschlussfläche des Anschlussbereichs der Radscheibe und wenigstens einer Anschlussfläche des Anschlussbereichs der Radfelge angeordnet.

Die Dichtung(en) kann/können so ausgebildet sein, dass sie im Montagezustand des Fahrzeugrades lokal differenziert, z.B. als Dichtungsring, in einem bestimmten Abschnitt zwischen den Anschlussflächen der Radscheibe und der Radfelge angeordnet ist/sind oder sich vollflächig, z.B. als Dichtfolie oder Dichtscheibe, zwischen diesen Anschlussflächen erstrecken. Dementsprechend kann/können die Dichtung(en) lokal begrenzt oder vollflächig an den Anschlussflächen der Radscheibe und der Radfelge anliegen.

In einem Kontaktbereich der Anschlussfläche(n) der Radscheibe und der Anschlussfläche(n) der Radfelge sind jeweils Kontaktflächen ausgebildet, die im Montagezustand des Fahrzeugrades unmittelbar aneinander anliegen oder mittelbar über Kontaktflächen zwischenlagernder Elemente der Verbindungsanordnung korrespondieren.

Vorzugsweise sind in einem ersten Kontaktbereich der Anschlussfläche(n) der Radscheibe und der Anschlussfläche(n) der Radfelge jeweils Kontaktflächen ausgebildet, die im Montagezustand des Fahrzeugrades unmittelbar aneinander anliegen oder mittelbar über Kontaktflächen von zwischenlagernden Elementen einer Verbindungsanordnung in Kontakt stehen. In diesem ersten Kontaktbereich der Anschlussfläche(n) ist keine zwischenliegende Dichtung vorgesehen.

Die zwischen der Anschlussfläche des Anschlussbereichs der Radscheibe und der Anschlussfläche des Anschlussbereichs der Radfelge angeordneten Dichtung(en) sind hierbei derart lokalbegrenzt ausgebildet und angeordnet, dass wenigstens eine An-Anschlussfläche oder ein Abschnitt einer Anschlussfläche der Radscheibe und wenigstens eine Anschlussfläche oder ein Abschnitt einer Anschlussfläche der Radfelge jeweils als erste Kontaktfläche zum unmittelbaren Kontakt der Radscheibe mit der Radfelge und/oder zum mittelbaren Kontakt der Radscheibe und/oder der Radfelge mittels einer Verbindungsanordnung ausgebildet ist. Bei einem mittelbaren Kontakt der Radscheibe und/oder der Radfelge liegt die Anschlussfläche der Radscheibe und/oder der Radfelge an zwischen der Radfelge und der Radscheibe lagernden Elementen der Verbindungsanordnung an.

Diese ersten Kontaktflächen stehen somit nicht mit einer Dichtung(en) in Kontakt.

In einem zweiten Kontaktbereich der Anschlussfläche(n) der Radscheibe und der Anschlussfläche(n) der Radfelge sind Kontaktflächen (Dichtflächen) ausgebildet, an denen im Montagezustand des Fahrzeugrades die Dichtung(en) dicht anliegt/anliegen.

Für die zwischen den Anschlussflächen oder Abschnitten der Anschlussflächen der Radscheibe und der Radfelge angeordnete(n) Dichtung(en) ist wenigstens eine Anschlussfläche oder ein Abschnitt einer Anschlussfläche der Radscheibe und wenigstens eine Anschlussfläche oder ein Abschnitt einer Anschlussfläche der Radfelge jeweils als zweite Kontaktfläche (Dichtfläche) zum unmittelbaren Kontakt der Dichtung(en) mit der Radscheibe und mit der Radfelge ausgebildet.

Diese zweiten Kontaktflächen sind im Unterschied zu den ersten Kontaktflächen zur unmittelbaren, dichtenden Anlage der Dichtung(en) an der Radfelge bzw. an der Radscheibe vorgesehen.

Das Verbindungselement dient der kraftschlüssigen Verbindung der Radscheibe mit der Radfelge kann beispielsweise eine Schraube, ein Schraubbolzen oder ein Niet sein. In der Radscheibe sind entsprechende Fügegänge für das Eingreifen der Verbindungselemente vorgesehen. Bei einer Schraube als Verbindungselement ist beispielsweise ein zum Außengewinde der Schraube korrespondierendes Innengewinde im Fügegang der Radscheibe vorgesehen.

Die durch die Verbindungselemente eingebrachten Kräfte bewirken eine Flächenpressung zwischen den Kontaktflächen des Anschlussbereiches der Radfelge und des Anschlussbereiches der Radscheibe, insbesondere zwischen den ersten Kontaktflächen des Anschlussbereichs der Radfelge und der Radscheibe, und stellen somit eine kraftschlüssige Verbindung von Radscheibe und Radfelge her.

Die Dichtung ist insbesondere zwischen den als zweite Kontaktflächen ausgebildeten Anschlussflächen der Radfelge und der Radscheibe angeordnet, und stets so, dass sie keinerlei Kontakt - weder unmittelbar noch mittelbar - mit einem im jeweiligen Durchgang bzw. Fügegang angeordneten Verbindungselement eingeht/eingehen.

Die Dichtung kann nach einer vorteilhaften Ausführungsform in Anpassung an die jeweiligen geometrischen Anforderungen und zur Erhöhung der Dichtfunktion mehrfach zwischen dem Anschlussbereich der Radscheibe und dem Anschlussbereich der Radfelge, insbesondere zwischen deren Kontaktflächen angeordnet sein, wobei auch hier jede der Dichtungen das/die Verbindungselement(e) kontaktfrei umgeben.

Eine oder mehrere Dichtung(en) kann/können beispielsweise mittelbar oder unmittelbar, jedoch stets beabstandet um ein oder mehrere Verbindungselement(e) und damit um den/die jeweiligen Durchgang/Durchgänge bzw. Fügegang/Fügegänge umlaufend angeordnet sein.

Mehrere radial um den Umfang der Radfelge bzw. um den Umgang der Radscheibe umlaufende Dichtungen können beispielsweise mittelbar oder unmittelbar, ein oder mehrere Verbindungselement(e) gemeinsam berührungsfrei flankierend angeordnet sein und somit gemeinsam den/die jeweiligen Durchgang/Durchgänge bzw. Fügegang/Fügegänge des/der Verbindungselement(e)flankierend angeordnet sein.

Durch die Flächenpressung auf die Kontaktflächen und die ihnen zugeordnete(n) Dichtung(en), insbesondere durch die Flächenpressung auf die ersten - dichtungsfreien - Kontaktflächen, wird eine effiziente Dichtwirkung zwischen den Anschlussbereichen der Radfelge und der Radscheibe zur Abdichtung des Durchgangs durch die Radfelge und somit eine felgenseitige Abdichtung der Reifenkammer gegenüber der Umgebung erzielt.

Die in einem kontaktlosen Abstand zu den Verbindungselementen positionierten Dichtungen, befinden sich dadurch weitgehend außerhalb des Kraftflusses zwischen Radfelge und Radscheibe, der vornehmlich durch die Verbindungselemente über deren unmittelbaren Eingriffs- und Kontaktflächen in die zu verbindenden Elemente (Radscheibe, Radfelge) eingebracht wird.

Hierdurch wird einerseits die Kraftübertragung, die das Verbindungselement zu absolvieren hat, nicht durch die Dichtung beeinflusst und gemindert. Die Verbindung bleibt weitestgehend von den temperatur- und lastabhängig veränderlichen Eigenschaften der Dichtung ungestört und stabil.

Andererseits ist die in vorstehend geschilderter Weise angeordnete Dichtung von den Wirkungen der durch die Verbindungselemente ausgeübten und übertragenen Kräfte, insbesondere von den im Betriebsfall des Fahrzeugrads übertragenen dynamischen Belastungen, weitgehend ausgenommen. Die auf die Verbindungselemente im Fahrbetrieb wirkenden dynamischen Belastungen führen bei diesen beispielsweise zu Zug- und Querkraftbelastungen und können in der Folge zu einem Schwingreibverschleiß der an der Verbindung beteiligten, und insbesondere unmittelbar am Verbindungselement anliegenden Bauteile führen.

Durch die beabstandete Positionierung der Dichtung zu den Verbindungselementen unterliegen die Dichtungen nicht der unmittelbaren Gefahr der Beschädigung durch diese Verbindungsbeanspruchungen, so dass die Dichtfunktion der Dichtungen nachhaltig gewährleistet bleibt. Insbesondere ist die Gefahr der Beschädigung der Dichtungen durch die dynamischen Verbindungsbeanspruchungen erheblich gemindert.

Es wird zudem kein Platz auf der Felgenaußenseite beansprucht, der in erhabener Gestalt das Aufziehen bzw. das Abziehen des Reifens behindern könnte. Auch die Funktion der Dichtung selbst kann durch ihre erfindungsgemäße Anordnung nicht durch das Auf- bzw. Abziehen des Reifens beeinträchtigt werden. Außerdem können die Dichtungen nicht durch das Fügen der Verbindungselemente während der Radmontage beeinträchtigt werden.

Die Positionierung, insbesondere die Ausbildung und Anordnung der Dichtung(en) ermöglicht mit einfachen Mitteln und geringem Aufwand eine dauerhaft betriebssichere Abdichtung des Durchgangs der Radfelge und somit der Reifenkammer gegenüber der Umgebung und gewährleistet zugleich eine zuverlässige Verbindung zwischen der Radfelge und der Radscheibe.

In weiterer vorteilhafter Ausführungsform ist/sind die Dichtungen lediglich lokal begrenzt zwischen den Anschlussflächen angeordnet und so anpassungsfähig ausgebildet und positioniert, dass ein erster Kontaktbereich der Anschlussflächen oder eines Abschnitts der Anschlussflächen der Radscheibe und der Radfelge mit jeweils einer oder mit mehreren ersten Kontaktfläche(n) ausgebildet ist, findet die Flächenpressung infolge der durch die Verbindungselemente zur Herstellung der kraftschlüssigen Verbindung von Radscheibe und Radfelge in die Verbindungspartner eingebrachten Kräfte vornehmlich in diesen ersten Kontaktflächen statt.

Die Dichtung(en) ist/sind somit sowohl in einem kontaktlosen Abstand zu den Verbindungselementen als auch außerhalb von miteinander korrespondierenden, kraftübertragenden Kontaktflächen der Radscheibe und der Radfelge angeordnet.

Die Dichtungen sind damit von der unmittelbaren Flächenpressung, die auf die ersten Kontaktflächen wirken, ausgenommen und befinden sich dadurch im Wesentlichen außerhalb des Kraftflusses zwischen Radfelge und Radscheibe, der durch die Verbindungselemente über deren unmittelbaren Eingriffsflächen und weiter über vornehmlich die Kontaktflächen in die zu verbindenden Elemente (Radscheibe, Radfelge) eingebracht wird.

Hierdurch wird die Kraftübertragung für eine wirksame, kraftschlüssige Verbindung von Radscheibe und Radfelge verbessert. Die von Dichtflächen freien Kontaktflächen stehen für eine effiziente Flächenpressung zur Verfügung. Die Verbindung bleibt zudem von temperatur- und lastabhängig veränderlichen Eigenschaften zwischengelagerter Dichtung unbeeinflusst und stabil.

Außerdem unterliegen die Dichtungen durch ihre Positionierung abseits der kraftübertragenden Kontaktflächen nicht der Gefahr der Beschädigung durch die auf die Kontaktflächen ausgeübte Flächenpressung, so dass die Dichtfunktion der Dichtungen noch sicherer gewährleistet bleibt.

Damit wird neben einer effizienten Kraftübertragung zugleich eine besonders effiziente Dichtwirkung zwischen den Anschlussbereichen der Radfelge und der Radscheibe erzielt.

Ein Verbindungselement kann nach einer vorteilhaften Ausführungsform auch ein Teil einer Verbindungsanordnung zur Verbindung der Radscheibe und der Radfelge sein, wobei die Dichtung(en) das/die Verbindungselement(e) so umgibt, dass kein Kontakt zwischen der / den Dichtung(en) und der / den Verbindungsanordnung(en) besteht.

Die Verbindungsanordnung weist neben dem Verbindungselement weitere Bestandteile der Verbindung auf, wie beispielsweise ein oder mehrere Buchsenteile, eine Lochscheibe oder Lochplatte, eine Unterlegscheibe, ein Insert, oder ein sonstiges Ein- oder Zwischenlage-Element , welche beispielsweise den Durchgang der Radfelge und/oder den Fügegang der Radscheibe auskleiden oder einfassen können und/oder sich zwischen den Anschlussbereichen der Radfelge und der Radscheibe erstrecken können. Diese Bestandteile der Verbindungsanordnung stehen zur Unterstützung der kraftschlüssigen Verbindung zwischen Radscheibe und Radfelge in einem unmittelbaren oder mittelbaren Wirkkontakt mit dem Verbindungselement.

Insbesondere Bestandteile der Verbindungsanordnung, welche zur Einfassung des Durchgangs und der den Durchgang umgebenden Randbereiche der Radfelge ausgebildet sind, dienen vorrangig sowohl dem Schutz des Durchgangs der Radfelge vor mechanischer Beanspruchung durch das durchführende, kraftübertragende Verbindungselement als auch der Kraftverteilung aus der lokalen Flächenpressung zwischen dem Verbindungselement und der Radfelge. Diese Maßnahmen sind besonders bei einer Radfelge aus faserverstärktem Kunststoff bedeutsam, um die Materialbeanspruchung des Faserverbundmaterials im Verbindungsbereich zu mindern.

Bei dieser Ausführung umgibt/umgeben die zwischen den Anschlussbereichen der Radscheibe und der Radfelge gelagerte(n) Dichtung(en) das/die Verbindungselement(e) und vorzugsweise auch weitere Bestandteile der Verbindungsanordnung so, dass die Dichtung(en)kontaktfrei zu allen Bestandteilen der Verbindungsanordnung(en) angeordnet ist/sind.

Dabei kann/können die Dichtung(en) das/die Verbindungselement(e) unmittelbar oder mittelbar, vorzugsweise unter Einbeziehung von Bestandteilen oder Elemente der Verbindungsanordnung(en), umgeben.

Beispielsweise kann eine ringförmige Dichtung ein Bestandteil der Verbindungsanordnung, wie ein den Durchgang der Radfelge säumendes Buchsenteil mit flanschartigem Bundkragen oder eine den Durchgang umgebende Lochscheibe, durch welche das Verbindungselement jeweils durchgeführt ist, in einem entsprechenden kontaktlosen Abstand umgeben. Die Dichtung kann das in radialer Erstreckung der Verbindungsanordnung äußerste, am weitesten erstreckte Bestandteil der Verbindungsanordnung umgeben, aber auch zwischen den verschiedenen Bestandteilen der Verbindungsanordnung zwischengelagert sein, sofern kein Kontakt mit dem Verbindungselement und den übrigen Bestandteilen der Verbindungsanordnung besteht.

Auch hierdurch wird zum einen sichergestellt, dass keine Luft aus der Reifenkammer über die Durchgänge durch die Radfelge und explizit durch die sich ergebenden Fugen bzw. Kontaktflächen zwischen dem durchführenden Verbindungselement und den übrigen Bestandteilen der Verbindungsanordnung in die Umgebung entweichen kann. Zum anderen wird durch die beabstandete, kontaktlose Positionierung der Dichtungen zu allen in Wirkverbindung miteinander stehenden Bestandteilen der Verbindungsanordnung die Dichtung von den Wirkungen der durch die Verbindungsanordnung ausgeübten und übertragenen Kräfte, insbesondere von den im Betriebsfall des Fahrzeugrads übertragenen dynamischen Belastungen, herausgenommen und somit vor Beschädigung durch die Verbindungsbeanspruchungen geschützt, so dass die Dichtfunktion der Dichtungen nachhaltig gewährleistet bleibt.

Somit wird entweder jeder Durchgang der Radfelge gesondert gegen die Umgebung luftdicht abgedichtet oder eine Gruppe von Durchgängen wird gemeinsam gegen die Umgebung luftdicht abgedichtet. In beiden Fällen wird eine zuverlässige Abdichtung der Reifenkammer erreicht.

Nach einer vorteilhaften Ausführungsform weist die Verbindungsanordnung eine mehrteilige Buchse auf. Durch eine Verbindungsanordnung mit einer mehrteiligen Buchse wird der Schwingreibverschleiß zwischen dem Verbindungselement und der Radfelge, insbesondere bei einer Radfelge aus faserverstärktem Kunststoff, nachhaltig gemindert, was insbesondere bei einer Radfelge aus faserverstärktem Kunststoff vorteilhaft ist.

Die Buchsenteile können bündig mit der äußeren oder inneren Oberfläche der Radfelge abschließen oder über diese überstehen oder können einen über die äußeren oder inneren Oberfläche der Radfelge erstreckten Flansch aufweisen oder erstrecken sich in eine Ausnehmung oder einen Fügegang der Radscheibe.

Bei beispielsweise einem über den Anschlussbereich der Radfelge flanschartig erstreckt ausgebildeten Buchsenteil kann der Flansch zwischen der Anschlussflächen der Radscheibe und der Radfelge, insbesondere zwischen deren ersten Kontaktflächen angeordnet sein, und damit korrespondierende Kontaktflächen zum mittelbaren Anschluss der Radscheibe an die Radfelge und zur mittelbaren Kraftübertragung zwischen dem Anschlussbereich der Radscheibe und dem Anschlussbereich der Radfelge bereitstellen.

Die Abdichtung des Durchgangs der Radfelge kann in dem Fall durch eine Dichtung erfolgen, welche das flanschartigen Buchsenteil vollständig und beabstandet umschließt und angepasst an die Höhe des Flansches des flanschartigen Buchsenteils ausgebildet ist. Die Dichtung ist insbesondere an den zweiten Kontaktflächen (Dichtflächen) im Anschlussbereich der Radfelge und der Radscheibe anliegend ausgebildet.

Eine Dichtung aus beispielsweise elastischem Material, weist vorzugsweise gegenüber der Höhe des Flansches des äußeren Buchsenteils ein Übermaß auf und wird im montierten Zustand der Verbindung entsprechend des Übermaßes zusammengepresst und bildet entsprechende Dichtflächen (zweite Kontaktflächen) an der Anschlussfläche der Radscheibe und der Anschlussfläche der Radfelge.

Insbesondere mehrteilige Buchsen mit ineinandergreifenden Buchsenteilen sind dazu geeignet, die durch die dynamischen Beanspruchungen des Fahrzeugrades auftretenden Mikrobewegungen in der Verbindung zu kompensieren und den daraus resultierenden Schwingreibverschleiß an der Radfelge aus Faserverbundmaterial zu minimieren.

Die Dichtungen sind bei dieser Ausführung im Betriebsfall des Fahrzeugrads infolge der positiven Wirkungen der durch die ineinandergreifenden Buchsenteile kompensierten Mikrobewegungen besonders günstig von den auf die Verbindung übertragenen dynamischen Belastungen herausgenommen.

Einer vorteilhaften Weiterbildung des Fahrzeugrads zufolge weist die Verbindungsanordnung eine oder mehrere Lochscheibe(n) und/oder eine oder mehrere Lochplatte(n) auf.

Auch in dieser Ausführung in Kombination mit einem Verbindungselement und/oder in Kombination mit einem Verbindungselement und weiteren Bestandteilen der Verbindungsanordnung ist eine ebenso wirksame und sichere Verbindung wie vorbeschrieben mit erzielbar.

Vorzugsweise ist/sind die Dichtung(en)koaxial umlaufend um ein oder mehrere Verbindungselement (e) oder um eine oder mehrere Verbindungsanordnung(en) angeordnet. Hierbei läuft/laufen die Dichtung(en) um eine zentrale, gemeinsame Achse des Verbindungselements bzw. der Verbindungsanordnung um. Bei einer Mehrzahl von Verbindungselementen oder Verbindungsanordnungen läuft/laufen die Dichtung(en) um eine zentrale, gemeinsame Achse der Gruppe der Verbindungselemente bzw. Verbindungsanordnungen um.

Die koaxial umlaufende Dichtung kann entsprechend der gewünschten Radgestaltung beliebige eckige, ringförmige, ovale oder bogenförmige Umlaufprofile aufweisen, die zwischen dem Anschlussbereich der Radfelge und dem Anschlussbereich der Radscheibe um ein Verbindungselement oder eine Verbindungsanordnung oder um eine Gruppe von Verbindungselementen oder Verbindungsanordnungen verlaufen, wobei eine Dichtung mit ringförmigen Umlaufprofil besonders einfach herzustellen und zu handhaben ist.

Diese Ausführung eignet sich bevorzugt für eine sternförmige Radscheibe mit einzelnen Speichen, schließt aber eine Anwendung für die Abdichtung der Durchgänge einer scheibenförmigen und schüsselförmigen Radscheibe mit einem geschlossenen, durchgehenden, äußeren Umfang nicht aus.

Der Anschlussbereich der Radfelge und der Anschlussbereich der der Speichenenden der sternförmigen Radscheibe weisen jeweils im Wesentlichen ebene oder leicht gekrümmte Anschlussflächen auf, die im Montagezustand des Fahrzeugrades miteinander korrespondieren und im Kontaktbereich von jeweils mindestens einer in koaxialer Nachbarschaft zum Verbindungselement bzw. zur Verbindungsanordnung umlaufenden Dichtung kontaktiert werden. Im Kontaktbereich der Radfelge und der Radscheibe sind somit zumindest eine erste Kontaktfläche und eine koaxial zum Verbindungselement bzw. zur Verbindungsanordnung umlaufende zweite Kontaktfläche (Dichtfläche) ausgebildet.

Bei einer insbesondere koaxialen Anordnung der Dichtung kann durch das Anzugsmoment des Verbindungselementes über die Radfelge und die Radscheibe und weiter über deren Dichtflächen auf die Dichtung eine sehr gleichmäßig verteilte und damit hohe Druckkraft aufgebracht werden. Damit wird eine besonders hohe Zuverlässigkeit der Abdichtung erreicht.

Entsprechend einer vorteilhaften Weiterbildung des Fahrzeugrades ist/sind die Dichtung(en) radial in Umfangsrichtung der Radscheibe bzw. der Radfelge umlaufend angeordnet.

Vorzugsweise sind zwei umlaufende Dichtungen paarweise und beidseitig der um den Umfang der Radscheibe (2) bzw. der Radfelge (1) angeordneten Verbindungselemente (4) oder Verbindungsanordnungen (12) angeordnet, so dass die Verbindungselemente oder Verbindungsanordnungen von den zwei radial umlaufenden Dichtungen eingefasst sind.

Diese Ausführung eignet sich bevorzugt für eine scheibenförmige und schüsselförmige Radscheibe mit einem geschlossenen, durchgehenden, äußeren Umfang. Beispielsweise weist der Anschlussbereich der Radfelge und der Anschlussbereich der Radscheibe radial umlaufende, zylindrische oder konische oder parabolische, zueinander zugewandte Anschlussflächen auf, die im Montagezustand des Fahrzeugrades miteinander korrespondieren und im Kontaktbereich beiderseits von jeweils mindestens einer radial umlaufenden Dichtung kontaktiert werden. Vorzugsweise sind hierbei beiderseits von einer ersten Kontaktfläche der Anschlussfläche der Radfelge bzw. der Radscheibe zwei flankierende zweite Kontaktflächen (Dichtflächen) für die Anlage der Dichtungen ausgebildet.

Das Umlaufprofil der radial umlaufenden Dichtung folgt entsprechend der Radgestaltung dem äußeren Umfangsprofil im Anschlussbereich der Radscheibe bzw. dem Umfangsprofil im Anschlussbereich der Radfelge.

Auch durch diese Ausführung der Dichtungsanordnung wird die Reifenkammer gegen den Austritt von Luft in die Umgebung vollständig und zuverlässig abgedichtet.

Diese radial umlaufende Dichtungsanordnung ermöglicht eine wirkungsvolle Radabdichtung mit einem besonders geringen technischen Aufwand.

Sämtliche Durchgänge der Radfelge können gemeinsam und gleichermaßen durch die beidseitig der Verbindungselemente bzw. Verbindungsanordnungen umlaufenden Dichtungen luftdicht eingefasst werden.

Diese radial umlaufende Dichtungsanordnung kann alternativ oder zusätzlich zur koaxial umlaufenden Dichtungsanordnung vorgesehen sein.

Nach einer Ausgestaltung ist/sind die Dichtungen(en) stoffschlüssig mit einer zweiten Kontaktfläche (Dichtfläche) des Anschlussbereichs der Radscheibe und/oder mit einer zweiten Kontaktfläche (Dichtfläche) des Anschlussbereichs der Radfelge verbunden.

Die stoffschlüssige Verbindung der Dichtung(en) kann beispielsweise mittels diverser Klebstoffe oder mittels, vorzugsweise selbstklebendes, Klebeband erfolgen.

Aber auch die Dichtung(en) selbst können klebende Eigenschaften aufweisen, z.B. als dichtender Klebstoff oder als selbstklebendes Dichtungsband ausgebildet sein, so dass diese Dichtungen unmittelbar einen Stoffschluss mit den zweiten Kontaktflächen herstellen können.

Mit diesem Stoffschluss der Dichtung(en) kann die gewünschte zum Verbindungselement oder zur Verbindungsanordnung beabstandete Position der Dichtung(en) bereits vor der Montage der Verbindung fixiert werden. Diese zusätzliche Lagefixierung der Dichtung(en) führt neben einer Erleichterung der Montage zu einer höheren Sicherheit bei der Ausübung der Dichtwirkung im Montagezustand.

Gemäß einer weiteren Ausgestaltung ist/sind in einer Anschlussfläche, insbesondere in einer Kontaktfläche des Anschlussbereiches der Radscheibe und/oder in einer Anschlussfläche, insbesondere in einer Kontaktfläche des Anschlussbereiches der Radfelge wenigstens eine Nut ausgebildet, in der die Dichtung(en) angeordnet ist/sind.

Bei dieser Ausführung sind in zumindest einer der im montierten Zustand des Fahrzeugrades miteinander korrespondierenden Anschlussflächen, insbesondere in zumindest einer der aneinander liegenden Kontaktflächen der Anschlussbereiche der Radscheibe und der Radfelge eine oder mehrere Nuten eingearbeitet. Im Montagezustand der Verbindung sind die Flächen der eingearbeiteten Nut als zweite Kontaktflächen (Dichtflächen) ausgebildet.

Die Nut sorgt für einen sicheren Sitz der Dichtung am vorgesehenen Ort, ohne Gefahr einer Lageverschiebung während der Belastung der Verbindung unter Betrieb des Fahrzeugrades.

In einer Nut können eine oder mehrere Dichtungen eingebracht sein. Gemeinsam mit den korrespondierenden Kontaktflächen der der Anschlussbereiche der Radscheibe bzw. der Radfelge, insbesondere gemeinsam mit einer der Nut gegenüberliegenden, korrespondierenden zweiten Kontaktfläche (Dichtfläche) des Anschlussbereichs der Radscheibe bzw. der Radfelge bewirkt die nutgelagerte Dichtung eine sichere Abdichtung des Durchgangs der Radfelge im montierten Zustand des Fahrzeugrades.

Die bevorzugt elastische Dichtung weist - bezogen auf die Nut-tiefe - vorzugsweise ein Übermaß auf. Infolgedessen wird die Dichtung im montierten Zustand der Verbindung von der Nut und der jeweils gegenüberliegenden Kontaktfläche (zweite Kontaktfläche) lagefixiert auf eine definierte Form und Dicke verpresst.

Die von dem Verbindungselement in die Verbindung eingebrachte Kraft übt eine Druckkraft auf die Dichtung in der Nut aus, die für eine zuverlässige Abdichtung zwischen den Anschlussbereichen der Radfelge und der Radscheibe sorgt. Insbesondere kann hierdurch gewährleistet werden, dass die Dichtwirkung unter jeder dynamischen Belastung der Verbindung gesichert ist.

In Abhängigkeit der Elastizität und des Übermaßes der Dichtung kann die Presskraft der Dichtung und damit die Dichtwirkung variiert werden.

Die miteinander korrespondierenden Kontaktflächen (erste Kontaktflächen) in den Anschlussbereichen der Radfelge und der Radscheibe können weitestgehend unbeeinflusst von den Dichtungen die notwendige Kraftübertragung zwischen der Radfelge und der Radscheibe nicht nur unterstützen, sondern effizient ausüben, da insbesondere die in den Nuten angeordneten Dichtungen nicht unmittelbar im Kraftfluss der Verbindung liegen und insbesondere vom Kraftfluss der Verbindung ausgenommen sind.

Durch die integrierte Anordnung der Dichtung in der Nut und durch eine entsprechende Auswahl des Materials kann außerdem ein Kriechen der Dichtung und somit ein Setzen der Verbindung verhindert werden.

Es können sowohl im Anschlussbereich der Radfelge als auch im Anschlussbereich der Radscheibe Nuten angeordnet sein, die gemeinsam mit der integrierten Dichtung insbesondere gegenüberliegend oder versetzt zueinander angeordnet sein können und entsprechend mehrfach wirksam sein können.

Gemäß dem vorbeschriebenen möglichen Verlauf der Dichtung(en) können eine oder mehrere Nut(en) im Anschlussbereich der Radfelge um einen Durchgang der Radfelge oder um mehrere Durchgänge der Radfelge herum angeordnet sein.

Dementsprechend können eine oder mehrere Nut(en) im Anschlussbereich der Radscheibe um einen Fügegang in der Radscheibe oder um mehrere Fügegänge der Radscheibe herum angeordnet sein.

Gemäß dem vorbeschriebenen möglichen Verlauf der radial in Umfangsrichtung der Radscheibe bzw. der Radfelge umlaufenden Dichtung(en) können die zugehörigen Nuten auch radial umlaufend im Anschlussbereich der geschlossen ausgebildeten Radscheibe und/oder radial umlaufend im Anschlussbereich der Radfelge ausgeführt sein und mithin beidseitig benachbart zu den um den äußeren Umfang der Radscheibe verteilt angeordneten Fügegänge bzw. zu den um den Umfang der Radfelge verteilt angeordneten Durchgängen verlaufen.

Entsprechend fassen die in den Nuten angeordneten Dichtungen die über den Umfang des Fahrzeugrades verteilt angeordneten Verbindungselemente bzw. Verbindungsanordnungen beidseitig der Anschlussbereiche der Radfelge und der Radscheibe ein.

Die Ausführung der Nuten entlang des äußeren Umfangs der geschlossenen Radscheibe bzw. entlang des Umfangs der Felgeninnenseite der Radfelge ist besonders einfach herzustellen und ihre Verwendung besonders montagefreundlich.

Gemäß einer Ausgestaltung ist in einer Randzone einer Anschlussfläche, insbesondere der Kontaktfläche des Anschlussbereiches der Radscheibe und/oder in einer Randzone einer Anschlussfläche, insbesondere der Kontaktfläche des Anschlussbereiches der Radfelge eine Ausnehmung ausgebildet, in der die Dichtung(en) angeordnet ist/sind. Im Montagezustand der Verbindung sind somit die Flächen der ausgearbeiteten Ausnehmung als zweite Kontaktflächen (Dichtflächen) ausgebildet.

Die vorgesehene Ausnehmung bewirkt ebenfalls einen sicheren Sitz der Dichtung am vorbestimmten Ort ohne Lageverschiebung während der Belastung der Verbindung unter Betrieb des Fahrzeugrades.

Für die lagesichere Anordnung der Dichtung kann einerseits in einer dem Durchgang der Radfelge zugewandten Randzone des Anschlussbereiches der Radfelge, nämlich an dem an den Durchgang angrenzenden umlaufenden Rand des Durchgangs eine in den Durchgang weisende, insbesondere zum Durchgang offene Ausnehmung ausgebildet sein.

Ebenso kann in einer dem Fügegang in der Radscheibe zugewandten inneren Randzone des Anschlussbereiches der Radscheibe, nämlich am umlaufenden Rand des Fügeganges der Radscheibe eine in Richtung des Fügegangs weisende, insbesondere zum Fügegang offene Ausnehmung ausgebildet sein.

Oder es kann in einer äußeren Randzone des Anschlussbereiches der Radscheibe eine randseitige, nach außen weisende, insbesondere zur Umgebung hin offene Ausnehmung am radialen Umfang der geschlossenen Radscheibe oder am Umfang jeder der Radspeichen ausgebildet sein.

Diese Ausnehmungen können alternativ oder zusätzlich zur Nut-Ausführung vorgesehen sein.

So können Materialschwächungen in den Randzonen der Anschlussbereiche der Radscheibe bzw. der Radfelge, die sich z. B. durch die Ausbildung von Nuten in Randnähe ergeben können, vermieden werden.

Derartige Materialschwächungen könnten sich besonders bei der Ausführung der Radscheibe in Sternform im Anschlussbereich der Speichenenden ergeben. Schmale Restwandstärken im Randbereich der Speichenenden unterliegen durch die starke Beanspruchung der Speichen der Gefahr, auszubrechen. Eine derartige unerwünschte Beschädigung des Radsterns kann durch die unmittelbar am Rand der Speichen angeordneten Bauteil-Ausnehmungen vorbeugend vermieden werden.

Ebenso können durch eine Ausnehmung des umlaufenden Randes des Durchgangs der Radfelge im Anschlussbereich der Radfelge bruchgefährdete Restwandstärken durch eine in Randnähe ausgebildete Nut vermieden werden.

Zudem kann die randseitige Ausnehmung durch entsprechendes Fräswerkzeug verfahrenstechnisch einfacher hergestellt werden, als eine Nut.

Gemäß weiteren vorteilhaften Ausgestaltungen ist die Dichtung als Dichtungselement, vorzugsweise als ringförmiges, lochscheibenförmiges oder bandförmiges Dichtungselement, ausgebildet.

Die Dichtung, insbesondere das Dichtungselement kann beispielsweise einen runden, ovalen, rechteckigen oder quadratischen Querschnitt aufweisen.

Die entsprechend vorgefertigte Dichtung bzw. das entsprechend vorgefertigte Dichtungselement ermöglicht es, die Abdichtung der Radfelge mit geringem Montageaufwand vorzunehmen.

Ringförmige, lochscheibenförmige oder bandförmige Dichtungen bzw. Dichtungselemente ermöglichen es, das / die Verbindungselement(e) bzw. die Verbindungsanordnung (en) einstückig zu umschließen und somit die Radfelge mit wenig Fertigungsaufwand, **z.B.** in einem Fertigungsgang, und besonders zuverlässig abzudichten.

Diese Dichtungen können montagefreundlich gehandhabt und insbesondere sehr komfortabel in entsprechend passend ausgebildete Nuten oder randseitigen Ausnehmungen eingelegt werden.

Als Dichtung können beispielsweise übliche Dichtringe mit rundem Querschnitt (O-Ringe), rechteckigem oder quadratischem Querschnitt, bandförmige Flachdichtungen mit rechteckigem Querschnitt, folienartige Dichtbänder oder Lochscheiben (Dichtscheiben) mit rechteckigem Querschnitt verwendet werden, welche als Massenprodukte kostengünstig verfügbar sind.

Eine alternative Ausführung der Dichtung besteht in der Verwendung einer formlosen Dichtmasse. Die formlosen Dichtmasse kann unmittelbar vor dem Zusammenfügen der Radscheibe mit der Radfelge in die ausgebildeten Nuten, randseitigen Ausnehmungen oder Fugen zwischen den jeweiligen Kontaktflächen (z.B. zwischen den vorgesehenen, zweiten Kontaktflächen (Dichtflächen)) extrudiert oder anderweitig eingebracht werden, wodurch die Dichtmasse die entsprechende räumliche Begrenzung und Fixierung erhält und dabei die Hohlräume vollständig und sicher ausfüllt.

Die Dichtmasse kann bei verbleibender Zugänglichkeit der Nuten, randseitigen Ausnehmungen oder Fugen, auch nach dem Fügen der Verbindung aufgetragen werden, was fallspezifisch bestimmte Montagevorteile haben kann.

Die formlose Dichtmasse kann beispielsweise aus einem härtbaren Kunstharz, wie z.B. Polyurethan, bestehen, der nach dem Einbringen bzw. Auftragen aushärtet.

Vorzugsweise besteht die Dichtung, ob als Dichtelement oder Dichtmasse, aus einem elastischen Material, insbesondere aus Fluor-Kautschuk.

Aufgrund der Elastizität des Materials der Dichtung kann diese zwischen den jeweiligen Kontaktflächen (z.B. zwischen den vorgesehenen, zweiten Kontaktflächen (Dichtflächen)) der Anschlussbereiche der Radscheibe und der Radfelge und insbesondere in den Nuten oder randseitigen Ausnehmungen unter der Druckkraft der Verbindung formbündig verpresst werden, was eine zuverlässige Abdichtung der Radfelge gewährleistet.

Die Verwendung von Fluor-Kautschuk sichert durch seine hochgradige Temperaturbeständigkeit im Weiteren eine hohe Standsicherheit der Dichtung zur Abdichtung der Radfelge auch bei hohen thermischen Belastungen des Fahrzeugrades.

Vorzugsweise besteht die Dichtung, ob als Dichtelement oder Dichtmasse, aus Silikon. Dieses Material ist neben seiner hohen Elastizität ebenfalls sehr temperaturbeständig mit den vorstehend genannten Sicherheiten für die Dichtigkeit der Radfelge.

Als besonders vorteilhaft erweist sich, dass eine an der Anschlussfläche der Radscheibe ausgebildete zweite Kontaktfläche (Dichtfläche) und/oder eine an der Anschlussfläche der Radfelge ausgebildete zweite Kontaktfläche (Dichtfläche) eine fluiddichte Beschichtung aufweist. Diese Beschichtung ist damit zwischen der Dichtung und der/den Dichtfläche(n) ausgebildet.

Zusätzlich zur vorgesehenen Dichtung kann diese Beschichtung mit höherer Wirkung verhindern, dass unerwünscht Feuchtigkeit von außen in die Verbindung bzw. Verbindungsanordnung zwischen Radfelge und Radscheibe eindringt, in dem Flüssigkeit die Dichtung im Anschluss an die Dichtungsfläche(n) unterwandert und/oder in den Grenzbereichen zwischen Dichtung und Dichtfläche(n) eindiffundiert.

Insbesondere bei Radfelgen oder deren Anschlussbereiche, die aus Faserverbundmaterial bestehen, und/oder bei Radscheiben oder deren Anschlussbereiche, die aus Faserverbundmaterial bestehen, kann Feuchtigkeit in das Faserverbundmaterial eindiffundieren, so dass in Kombination mit metallischen Teilen der Verbindungsanordnung oder metallischen Radscheiben bzw. Radfelgen unter Beteiligung von Feuchtigkeit Korrosionserscheinungen auftreten können.

Durch die vorgesehene Beschichtung können derartige Korrosionserscheinungen unterbunden werden, so dass hierdurch eine dauerhafte Festigkeit der Verbindung zwischen Radfelge und Radscheibe gewährleistet werden kann.

Die fluiddichte Beschichtung kann beispielsweise eine Lackschicht sein, wie sie auch bei der Beschichtung von Faserverbund-Bauteilen, wie zum Beispiel bei Radfelgen oder Radscheiben aus Faserverbundmaterial, zum Feuchtigkeits- und/oder UV-Schutz angewandt wird.

Vorzugsweise ist zusätzlich eine an die Dichtfläche(n) angrenzende, nach außen gerichtete Anschlussfläche im Anschlussbereich der Radscheibe bzw. der Radfelge und/oder eine an die Dichtfläche(n) angrenzende, nach außen gerichtete Oberfläche der Radscheibe bzw. der Radfelge fluiddicht beschichtet, um das Eindringen von Feuchtigkeit von außen großflächig zu vermeiden und die Schutzwirkung zu erhöhen.

Vorzugsweise ist eine zum Schutz der Oberfläche der Radscheibe bzw. der Radfelge vorgesehene Beschichtung vollflächig über die Dichtfläche(n) erstreckt ausgebildet.

Von der erfindungsgemäßen Ausführung ist umfasst, dass die an der Kraftübertragung beteiligten ersten Kontaktflächen im Anschlussbereich der Radscheibe und der Radfelge von der Beschichtung ausgenommen ist, so dass sich kein Beschichtungsmaterial im Kraftfluss der Verbindung befindet, wodurch ein die Verbindungsmaterialien schützender Korrosionsschutz erzielt wird, ohne die Kraftübertragung in der Verbindung zu bebeeinträchtigen.

Weitere vorteilhafte Ausgestaltungen und Weiterbildungen der Erfindung gehen aus den Zeichnungen und den zugehörigen Beschreibungen der Ausführungsbeispiele hervor.

Die Erfindung wird anhand der folgenden, in den Figuren dargestellten Ausführungsbeispiele näher erläutert.

Es zeigen:

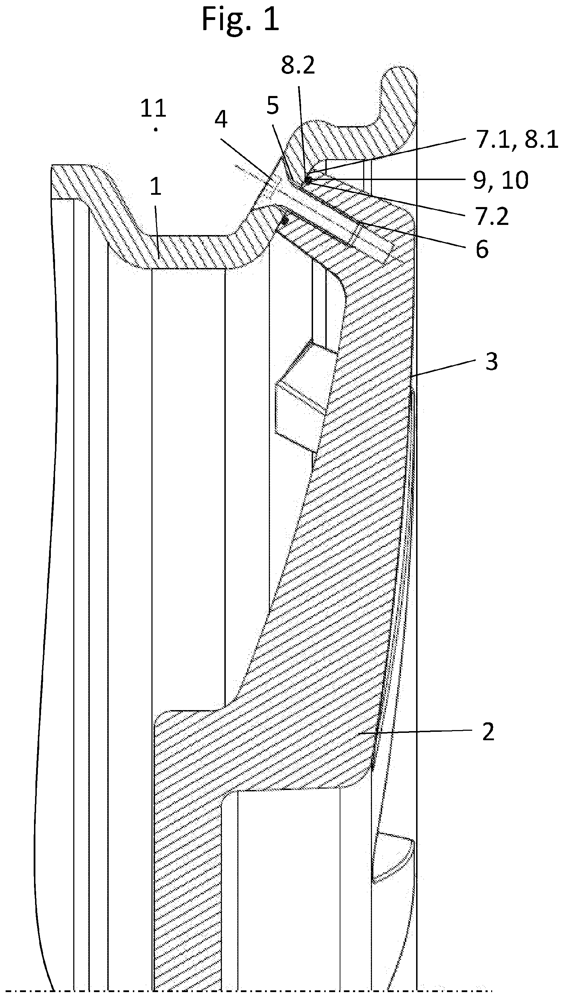

- Fig. 1: eine Schnittdarstellung eines halbseitigen Ausschnitts eines Fahrzeugrades mit einer mittels Verbindungselemente mit der Radfelge verbundenen sternförmigen Radscheibe, mit jeweils einer Dichtung in einer ringförmigen Nut in der Kontaktfläche (Anschlussfläche) des Anschlussbereiches der Speiche der Radscheibe,

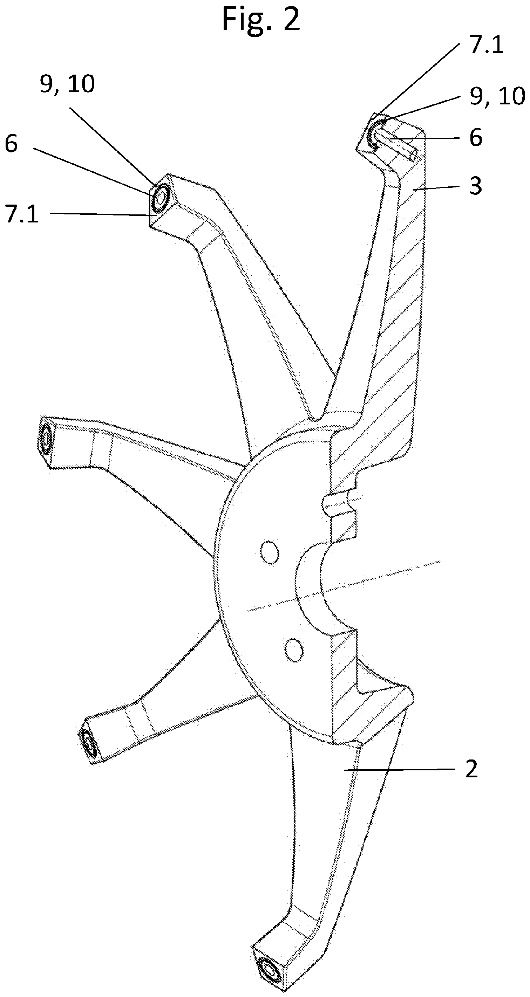

- Fig. 2: eine isometrische Schnittdarstellung der sternförmigen Radscheibe nach Fig. 1,

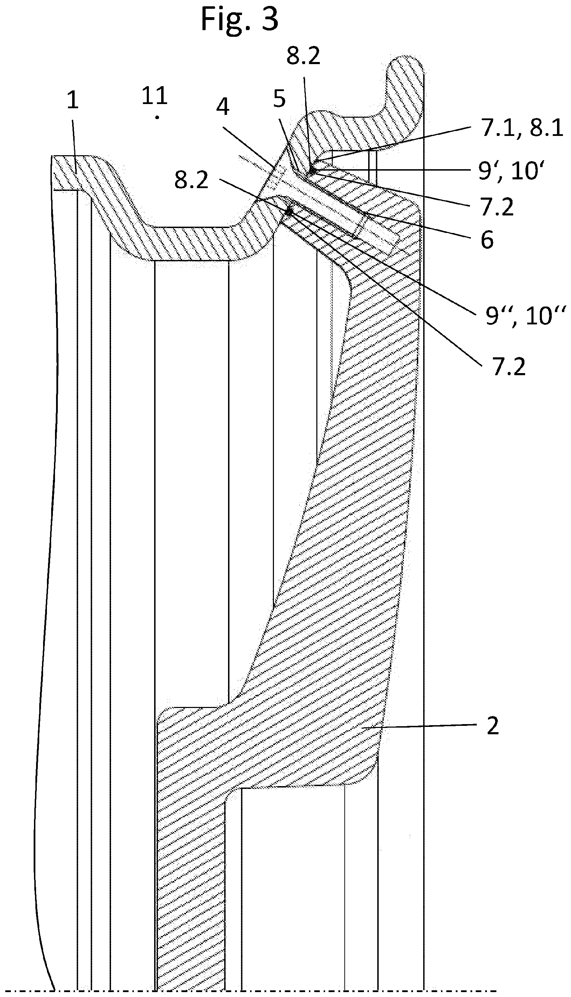

- Fig. 3: eine Schnittdarstellung eines halbseitigen Ausschnitts eines Fahrzeugrades mit einer mittels Verbindungselemente mit der Radfelge verbundenen schüsselförmigen Radscheibe, mit zwei Dichtungen in je einer radial um den Umfang des Anschlussbereiches des Radkranzes der Radscheibe umlaufenden Nut in der Kontaktfläche (Anschlussfläche) des Radkranzes,

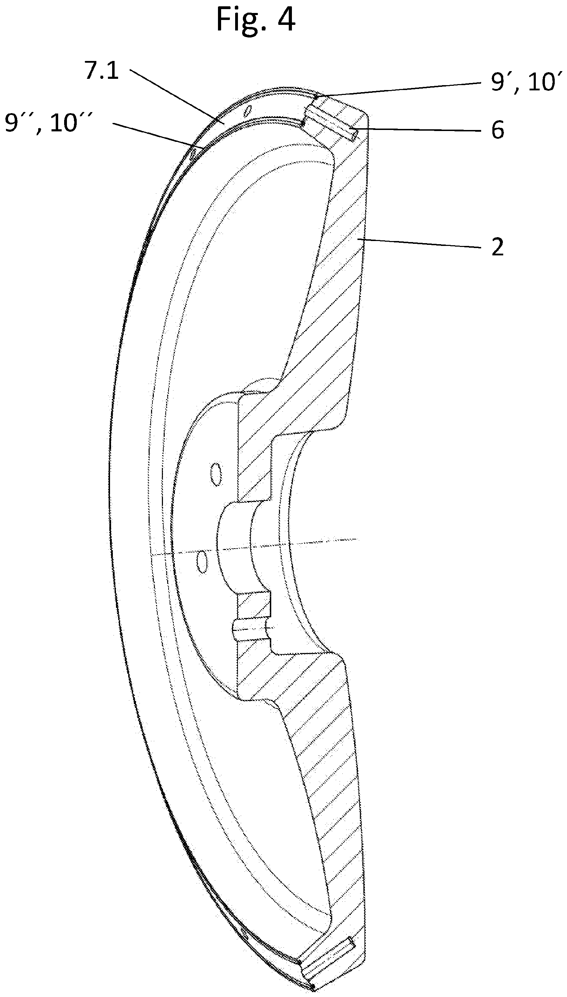

- Fig. 4: eine isometrische Schnittdarstellung der schüsselförmigen Radscheibe nach Fig. 3,

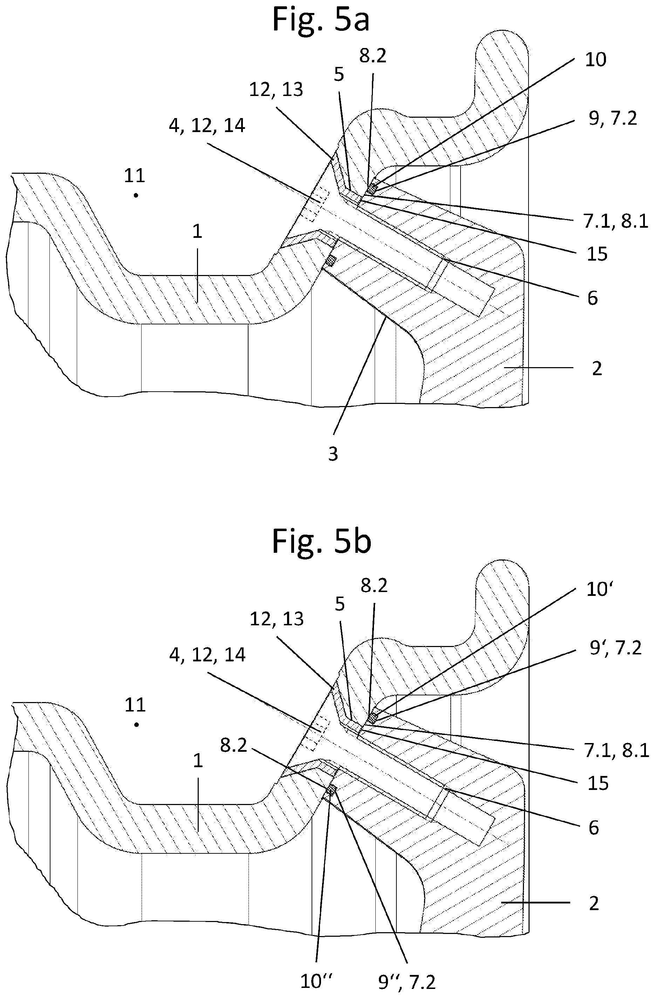

- Fig. 5a: eine Schnittdarstellung eines Ausschnitts eines Fahrzeugrades mit einer mittels Verbindungsanordnungen mit der Radfelge verbundenen sternförmigen Radscheibe, mit jeweils einer Dichtung in einer ringförmigen Nut in der Kontaktfläche (Anschlussfläche) des Anschlussbereiches der Speiche der Radscheibe,
- Fig. 5b: eine Schnittdarstellung eines Ausschnitts eines Fahrzeugrades mit einer mittels Verbindungsanordnungen mit der Radfelge verbundenen schüsselförmigen Radscheibe, mit zwei Dichtungen in je einer radial um den Umfang des Anschlussbereiches des Radkranzes der Radscheibe umlaufenden Nut in der Kontaktfläche (Anschlussfläche) des Radkranzes,

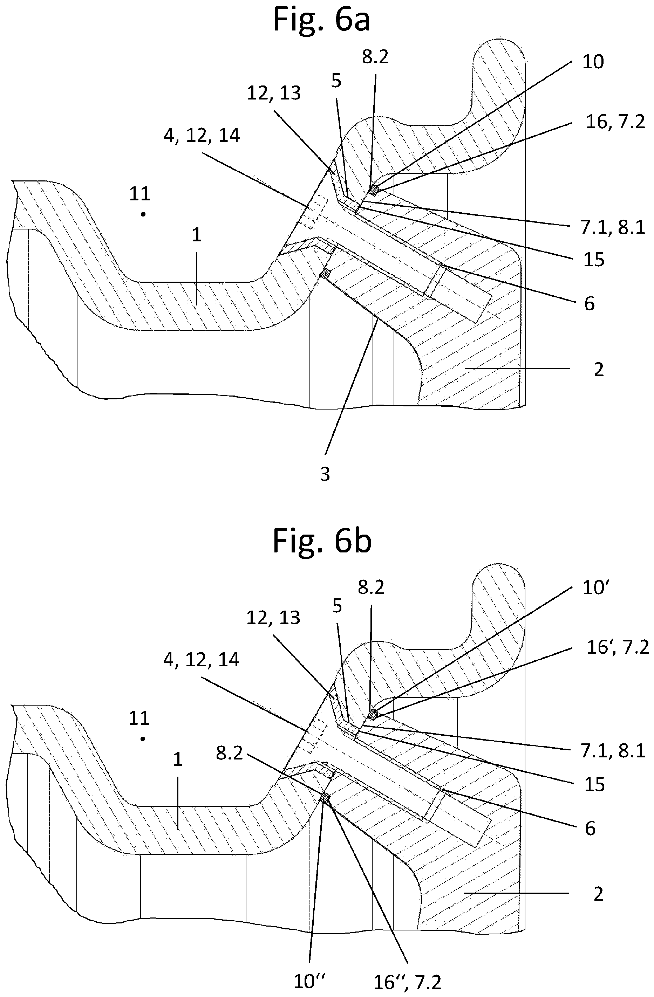

- Fig. 6a: eine Schnittdarstellung eines Ausschnitts eines Fahrzeugrades mit einer mittels Verbindungsanordnungen mit der Radfelge verbundenen sternförmigen Radscheibe, mit jeweils einer Dichtung in einer ringförmigen Ausnehmung in einer Randzone des Anschlussbereiches der Speiche der Radscheibe,
- Fig. 6b: eine Schnittdarstellung eines Ausschnitts eines Fahrzeugrades mit einer mittels Verbindungsanordnungen mit der Radfelge verbundenen schüsselförmigen Radscheibe, mit zwei Dichtungen in je einer Ausnehmung in einer Randzone des Anschlussbereiches des Radkranzes der Radscheibe,

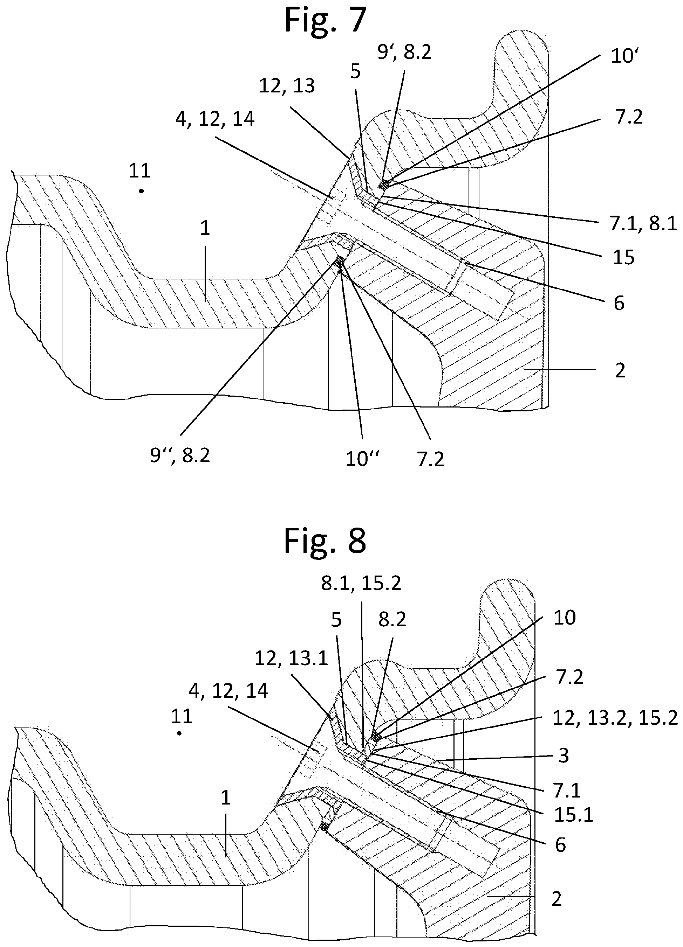

- Fig. 7: eine Schnittdarstellung eines Ausschnitts eines Fahrzeugrades mit einer mittels Verbindungsanordnungen mit der Radfelge verbundenen schüsselförmigen Radscheibe, mit zwei Dichtungen in einer radial um den Umfang des Anschlussbereiches der Radfelge umlaufenden Nut in der Kontaktfläche (Anschlussfläche) des Anschlussbereiches der Radfelge,
- Fig. 8: eine Schnittdarstellung eines Ausschnitts eines Fahrzeugrades mit einer mittels alternativen Verbindungsanordnungen mit der Radfelge verbundenen sternförmigen Radscheibe, mit jeweils einer ringförmigen Dichtung zwischen den Kontaktflächen (Anschlussflächen) der Anschlussbereiche der Radfelge und der Speiche der Radscheibe,

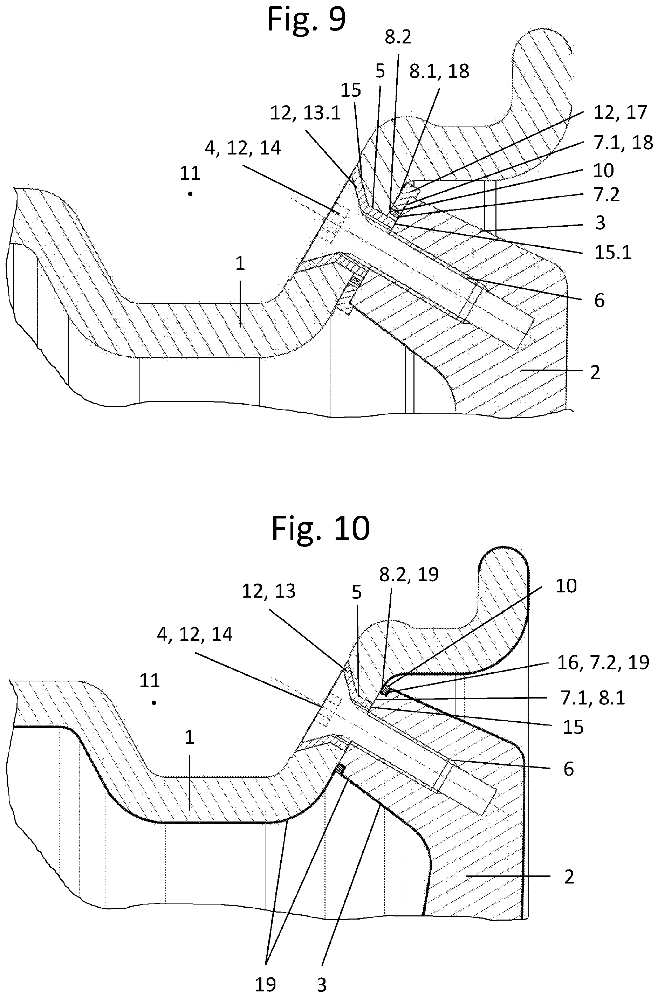

- Fig. 9: die Schnittdarstellung eines Ausschnitts eines Fahrzeugrades mit einer mittels weiterer alternativen Verbindungsanordnungen mit der Radfelge verbundenen sternförmigen Radscheibe, mit jeweils einer ringförmigen Dichtung zwischen den Kontaktflächen (Anschlussfläche) der Anschlussbereiche der Radfelge und der Speiche der Radscheibe,
- Fig. 10: eine Schnittdarstellung eines Ausschnitts eines Fahrzeugrades mit einer mittels Verbindungsanordnungen mit einer beschichteten Radfelge verbundenen sternförmigen Radscheibe, mit jeweils einer Dichtung in einer ringförmigen Ausnehmung in einer Randzone des Anschlussbereiches der beschichteten Speiche der Radscheibe,

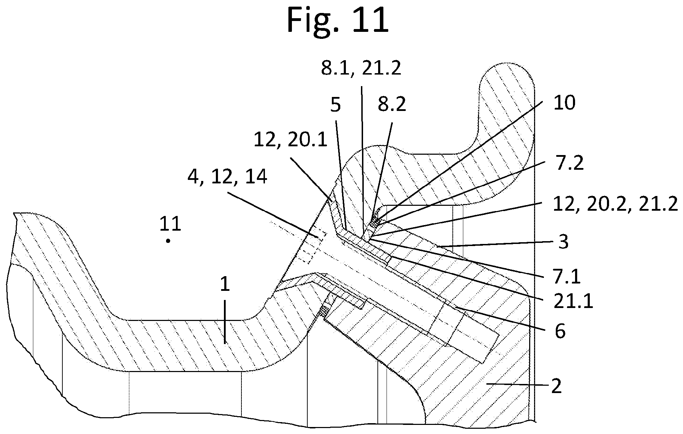

- Fig. 11: eine Schnittdarstellung eines Ausschnitts eines Fahrzeugrades mit einer mittels alternativen Verbindungsanordnungen mit der Radfelge verbundenen sternförmigen Radscheibe, mit jeweils einer ringförmigen Dichtung zwischen den Kontaktflächen (Anschlussflächen) der Anschlussbereiche der Radfelge und der Speiche der Radscheibe.

In den im Folgenden erläuterten Beispielen wird auf die beigefügten Zeichnungen Bezug genommen, die einen Teil der möglichen, von der Erfindung umfassten Beispiele bilden und in denen zur Veranschaulichung spezifische Ausführungsformen gezeigt sind, in denen die Erfindung ausgeübt werden kann.

Es versteht sich, dass andere Ausführungsformen benutzt und strukturelle oder logische Änderungen vorgenommen werden können, ohne von dem Schutzumfang der vorliegenden Erfindung abzuweichen. Es ist von der Erfindung umfasst, dass die Merkmale der hierin beschriebenen verschiedenen beispielhaften Ausführungsformen miteinander kombiniert werden können, sofern nicht ausdrücklich anders angegeben. Die folgende ausführliche Beschreibung ist deshalb nicht in einschränkendem Sinne aufzufassen; der Schutzumfang der vorliegenden Erfindung wird durch die angefügten Ansprüche definiert.

Im Rahmen dieser Beschreibung werden die Begriffe "verbunden", "fügen" und "angeschlossen / anschließen" verwendet zum Beschreiben sowohl einer direkten als auch einer indirekten Verbindung, einer direkten oder indirekten Fügung sowie eines direkten oder indirekten Anschlusses.

In den Figuren werden identische oder ähnliche Bauteile / Elemente mit identischen Bezugszeichen versehen, soweit dies zweckmäßig ist.

Fig. 1 zeigt ein Fahrzeugrad mit einer Radfelge 1 und einer sternförmigen Radscheibe 2 mit Radspeichen 3. Die Radscheibe 2 als auch die Radfelge 1 bestehen aus einer Aluminiumlegierung.

Die Radfelge 1 ist mit der sternförmigen Radscheibe 2 durch mehrere, entsprechend der Speichenanzahl um den Umfang der Radfelge angeordnete Verbindungselemente 4, die beispielhaft als Schraube ausgeführt sind, kraftschlüssig verbunden. Die Fig. 1 zeigt einen Schnitt unmittelbar durch ein Verbindungselement 4, welches durch einen Durchgang 5 der Radfelge 1 führend in einen mit einem Innengewinde ausgeführten Fügegang 6 einer Radspeiche 3 der Radscheibe 1 eingreift.

Zum Anschluss der sternförmigen Radscheibe 2 an die Radfelge 1 weisen diese jeweils spezielle Anschlussbereiche mit Anschlussflächen auf, an denen diese Radelemente miteinander ananschließen. Der Anschlussbereich der sternförmigen Radscheibe 2 nach dem Ausführungsbeispiel ist am Ende jeder Speiche 3 der Radscheibe 2 ausgebildet und weist jeweils eine Anschlussfläche auf, die abschnittsweise als erste Kontaktfläche 7.1 ausgebildet ist, die im dargestellten montierten Zustand des Fahrzeugrades mit einer ersten Kontaktfläche 8.1 der Anschlussfläche des Anschlussbereichs der Radfelge 1 unmittelbar in Kontakt steht.

Infolge der durch die Verbindungselemente 4 bewirkten kraftschlüssigen Verbindung zwischen der Radfelge 1 und der Radscheibe 2 unterliegen diese ersten Kontaktflächen 7.1, 8.1 einer erheblichen Flächenpressung.

In einem weiteren Abschnitt der Anschlussfläche des Anschlussbereichs der Radscheibe 2 bzw. der Radspeichen 3, benachbart zu den ersten Kontaktflächen 7.1 der Speichenenden der Radspeichen 3, sind jeweils ringförmig um jeweils einen Fügegang 6 konzentrisch angeordnete Nuten 9 ausgebildet.

In jeder der Nuten 9 ist eine elastische Dichtung 10 in Form eines O-Ringes (Dichtring) oder einer Flachdichtung (ringförmige Dichtscheibe)angeordnet, welche aus Fluorkautschuk bestehen.

Die Dichtungen 10 umgeben somit die Verbindungselemente 4 in einem kontaktfreien Abstand und schließen den Durchgang 5 durch die Radfelge 1 ein.

In der Nut 9 sind zweite Kontaktflächen (Dichtflächen) 7.2 ausgebildet, an denen im dargestellten montierten Zustand des Fahrzeugrades die Dichtung 10 unmittelbar anliegt.

In einem weiteren Abschnitt der Anschlussfläche des Anschlussbereichs der Radfelge 1 ist eine zweite Kontaktfläche (Dichtfläche) 8.2 ausgebildet, die im dargestellten montierten Zustand des Fahrzeugrades mit der Dichtung 10 unmittelbar in Kontakt steht.

Die elastische Dichtung 10 weist gegenüber den Abmaßen der Nut 9 ein bestimmtes Übermaß auf. Dementsprechend wird die elastische Dichtung 10 beim Verschrauben der Verbindungselemente 4 auf eine definierte Dicke verpresst, die der Nut-Tiefe entspricht. Die Vorspannkraft der Schraube 4 übt über die Anschlussfläche der Radfelge 1 und damit über die Kontaktflächen 8.1, 8.2 des Anschlussbereichs der Radfelge 1 sowie über die Anschlussfläche der Radscheibe 2 und damit über die Kontaktflächen 7.1,7.2 des Anschlussbereichs der Radfelge 1 eine Druckkraft auf die Dichtung 10 in der Nut 9 aus, welche die Dichtung 10 fest an den Dichtflächen 7.2 der Nut 9 und an der mit der Dichtung 10 korrespondierenden Dichtfläche 8.2 in der Anschlussfläche der Radfelge 1 lagern lässt und so für eine zuverlässige Abdichtung der Radfelge 1 bzw. der auf der Felgenaußenseite befindlichen Reifenkammer 11 gegenüber der äußeren Umgebung sorgt.

Unter der Druckspannung der elastischen Dichtung 10 wird die Dichtwirkung auch bei dynamisch wechselnder Belastung der Verbindung gewährleistet. Durch die fixierte Anordnung des Dichtrings 10 in der Nut 9 wird außerdem ein Kriechen der Dichtung 10 und somit das Setzen der Verbindung verhindert.

Die Kraftübertragung zwischen der Radfelge 1 und der Radscheibe 2 wird durch die partiell an den Dichtflächen 7.2, 8.2 wirkende Dichtung 5 nicht beeinflusst, da die Dichtung 10 nicht unmittelbar im Kraftfluss zwischen den korrespondierenden, unmittelbar miteinander kontaktierenden Kontaktflächen 7.1, 8.1 der Anschlussbereiche der Radscheibe 2 und der Radfelge 1 liegt, wobei die ausgeübte Presskraft des Dichtrings 10 vernachlässigbar klein gegenüber der Vorspannkraft der Schraube 4 und damit gegenüber der Flächenpressung zwischen den korrespondierenden Kontaktflächen 7.1, 8.1 ist.

Die Fig. 2 zeigt die sternförmige Radscheibe 2 nach Fig. 1 in einer anschaulichen isometrischen Schnittdarstellung. Die sternförmige Radscheibe 2 nach diesem Ausführungsbeispiel umfasst insgesamt acht Speichen 3. An den Speichenenden der Speichen 3 sind die Anschlussflächen mit den Kontaktflächen 7.1 ausgebildet und - gut ersichtlich - mit jeweils einer Nut 9 ausgebildet, die konzentrisch und ringförmig um den Fügegang 6 umlaufenden angeordnet ist.

In den Nuten 9 ist als Dichtung 10 jeweils ein O-Ring (Dichtring) oder eine Flachdichtung (ringförmige Dichtscheibe) aus Fluorkautschuk angeordnet.

Fig. 3 zeigt ein Fahrzeugrad mit einer schüsselförmigen Radscheibe 2. Die Radscheibe 2 als auch die Radfelge 1 bestehen aus Aluminiumlegierung.

Die Radfelge 1 ist mit der schüsselförmigen Radscheibe 2 durch mehrere, um den Umfang verteilt angeordnete Verbindungselemente 4, die im Ausführungsbeispiel als Schraube ausgeführt sind, kraftschlüssig verbunden. Die Fig. 3 zeigt einen Schnitt unmittelbar durch ein Verbindungselement 4, welches durch einen Durchgang 5 der Radfelge 1 führend in einen mit Innengewinde ausgeführten Fügegang 6 der Radscheibe 2 eingreift.

Zum Anschluss der schüsselförmigen Radscheibe 2 an die Radfelge 1 weisen diese jeweils spezielle Anschlussbereiche mit radial umlaufenden Anschlussflächen auf, an denen diese Radelemente miteinander anschließen. Bei der schüsselförmigen Radscheibe 2 ist der Anschlussbereich am äußeren Umfang der Radscheibe 2 (Radkranz) ausgebildet und weist eine radial umlaufende Anschlussfläche auf, die abschnittsweise als radial umlaufende erste Kontaktfläche 7.1 ausgebildet ist, die im dargestellten montierten Zustand des Fahrzeugrades mit der radial umlaufenden ersten Kontaktfläche 8.1 der Anschlussfläche des Anschlussbereiches der Radfelge 1 unmittelbar in Kontakt steht.

In einem weiteren Abschnitt der Anschlussfläche des Anschlussbereichs der Radscheibe 2, benachbart zu den ersten Kontaktflächen 7.1 der Radscheibe 2 sind entlang des Umfangs der Radscheibe 2 zwei Nuten 9', 9" eingebracht, die in einem bestimmten Abstand beidseitig der um den Umfang der Radscheibe angeordneten Fügegänge 6 der Radscheibe 2 verlaufen.

In den Nuten 9', 9" sind zwei elastische Dichtungen 10', 10'' angeordnet, die als große O-Ringe (Dichtringe) oder Flachdichtungen (Dichtband) aus Fluorkautschuk ausgeführt sind.

In den radial umlaufenden Nuten 9', 9" sind jeweils zweite Kontaktflächen (Dichtflächen) 7.2 ausgebildet, an denen im dargestellten montierten Zustand des Fahrzeugrades die Dichtungen 10', 10'' unmittelbar anliegen.

In einem weiteren Abschnitt der Anschlussfläche des Anschlussbereichs der Radfelge 1 sind beidseitig der Durchgänge 5 der Verbindungselemente 4 radial umlaufende zweite Kontaktflächen (Dichtfläche) 8.2 ausgebildet, die im dargestellten Montagezustand des Fahrzeugrades jeweils mit den Dichtungen 10', 10'' unmittelbar in Kontakt steht.

Das Wirkprinzip der Kraftübertragung der Verbindung vom Verbindungselement 4 über die ersten Kontaktflächen 7.1, 8.1 der Anschlussbereiche des Radkranzes der Radscheibe 2 und der Radfelge 1 sowie die Dichtwirkung über die Dichtflächen 7.2, 8.2 durch die übermaßlichen Dichtungen 10', 10'' in den Nuten 9', 9" erfolgt analog der Beschreibung nach Fig. 1 und 2, worauf verwiesen wird.

Damit schließen im dargestellten Endzustand (Montagezustand) die beiden Dichtungen 10', 10'' beidseitig sämtliche Durchgänge 5 durch die Radfelge 1 ein und umgeben alle Verbindungselemente 4 in einem zu den Verbindungselementen 4 kontaktfreien Abstand.

Sämtliche Verbindungselemente 4 befinden sich durch die erfindungsgemäße externe Anordnung der Dichtungen 10', 10'' gemeinsam und vollständig im Überdruckbereich der Reifenkammer 11, so dass die Verbindungselemente 4 nicht einzeln abgedichtet werden müssen.

In Fig. 4 ist die schüsselförmige Radscheibe 2 nach Fig. 3 zur Veranschaulichung in einer isometrischen Schnittdarstellung gezeigt.

Gut ersichtlich sind die zwei über den Umfang des Anschlussbereiches des Radkranzes der schüsselförmigen Radscheibe 2 radial umlaufenden Nuten 9', 9" dargestellt, in denen die Dichtungen 10', 10'' ringförmig verlaufen.

Die Nuten 9', 9" sind beidseitig der Fügegänge 6 angeordnet, so dass die Dichtungen 10', 10"im hier nicht dargestellten Zusammenbauzustand des Fahrzeugrades sämtliche durch die Radfelge 1 und die Radscheibe 2 durchführenden Verbindungen vollständig einschließen.

Diese Ausführung zur Abdichtung der Radfelge 1 ist besonders effizient, weil mit geringem technischem und technologischem Aufwand, herzustellen.

Die Fig. 5a zeigt ein Fahrzeugrad mit einer Radfelge 1 und einer sternförmigen Radscheibe 2 mit Speichen 3, die gegenüber der Ausführung nach Fig. 1 und 2 mittels mehrerer, entsprechend der Speichenanzahl um den Umfang der Radfelge angeordneter Verbindungsanordnungen 12 verbunden sind.

Die Radscheibe 2 besteht aus Aluminiumlegierung, während die Radfelge 1 nach diesem Ausführungsbeispiel aus Faserverbundmaterial besteht.

Entsprechend der Ausführung nach Fig. 1 und 2 sind in den Anschlussflächen, insbesondere in den Kontaktflächen 7 der Radspeichen 3 erste Kontaktflächen 7.1 und jeweils um einen Fügegang 6 konzentrisch angeordnete ringförmige Nuten 9 mit zweiten Kontaktflächen 7.2 ausgebildet, in denen ein elastischer Dichtring 10 oder eine Dichtscheibe 10 aus Fluorkautschuk angeordnet ist.

Nachfolgend sollen lediglich die Unterschiede zur Ausführung nach Fig. 1 und 2 erläutert werden.

Bei der Ausführung nach Fig. 5a erfolgt die kraftschlüssige Verbindung zwischen der Radfelge 1 und der Radscheibe 2 durch die Verbindungsanordnungen 12, die jeweils aus einer Schraube 4 als Verbindungselement 4 und einer einteiligen Buchse 13 bestehen. Die Buchse 13 kleidet den Durchgang 5 der Radfelge 1 aus und schließt bündig mit der Anschlussfläche, insbesondere mit der Kontaktfläche 8.1 des Anschlussbereiches der Radfelge 1 ab. Das Verbindungselement 4 ist durch die Buchse 13 geführt und greift in das Innengewinde des Fügeganges 6 in den Speichenenden der Radscheibe 2 ein, wobei ein Schraubenkopf 14 der Schraube 4 in dem konisch geweiteten Rand der Buchse 13 sitzt.

Der Kraftfluss der Verbindung erfolgt hier vornehmlich über das Verbindungselement 4 und die Buchse 13 auf die Radfelge 1 und die Radscheibe 2, wobei eine stirnseitige Kontaktfläche 15 der Buchse 13 sowie die erste Kontaktfläche 8.1 des Anschlussbereiches der Radfelge 1 gemeinsam mit der ersten Kontaktfläche 7.1 des Anschlussbereiches der Radscheibe 2, wobei die Kontaktflächen jeweils miteinander wie dargestellt unmittelbar in Kontakt stehen.

Die Buchse 13, vorzugsweise aus Titanlegierung, dient dem Schutz des Faserverbundmaterials der Radfelge 1 vor unerwünschtem Schwingreibverschleiß, indem es die von der Schraube 6 in den Durchgang 5 der Radfelge 1 eingetragene Kräfte kompensiert. Insbesondere mindert der konisch ausgeweitete Rand der Buchse 13 die Flächenpressung im Randbereich des Durchgangs 5 durch die Radfelge 1.

Im Sinne der Erfindung ist auch bei dieser Ausführung die in die Anschlussfläche, insbesondere in der Kontaktfläche 7 der Radscheibe 2 eingearbeiteten ringförmigen Nut 9 derart von dem Fügegang 6 beabstandet, dass die einliegende Dichtung 10 im Montagezustand die Buchse 13 bzw. die stirnseitige Kontaktfläche 15 der Buchse 13 nicht kontaktiert.

Jede der Dichtungen 10 umschließt somit jeweils die gesamte Verbindungsanordnung 12 aus Verbindungselement 4 und Buchse 13 in einem kontaktfreien Abstand.

Das Wirkprinzip der Kraftübertragung der Verbindung vom Verbindungselement 4 über die Kontaktflächen 7.1, 8.1, 15 der Anschlussbereiche der Speichen 3 der Radscheibe 2 und der Radfelge 1 sowie die Dichtwirkung über die Dichtflächen 7.2, 8.2 durch die in der ringförmigen Nut 9 befindliche, übermaßige Dichtung 10 erfolgt analog der Beschreibung nach Fig. 1 und 2.

Die gesamte Verbindungsanordnung 12 befindet sich durch die erfindungsgemäße externe Anordnung der Dichtung 10 vollständig im Überdruckbereich der Reifenkammer 11, so dass die an der Verbindung beteiligten Teile der Verbindungsanordnung 12 nicht separat abgedichtet werden müssen.

Die Fig. 5b zeigt eine Darstellung für eine analoge Ausführung nach Fig. 5a, jedoch mit einer schüsselförmigen Radscheibe 2 unter Verwendung von zwei radial umlaufenen Dichtungen 10', 10'' gemäß der Ausführung nach Fig. 3 und 4.

Hiernach sind in der radial umlaufenden Anschlussfläche, insbesondere in der Kontaktfläche 7 des Radkranzes der schüsselförmigen Radscheibe 2 beidseitig der Verbindungsanordnungen 12 je eine radial umlaufende Nut 9', 9" ausgebildet, in denen jeweils eine radial umlaufene Dichtungen 10', 10'' aus beispielsweise Fluorkautschuk angeordnet ist, welche sämtliche Verbindungsanordnungen 12 analog der Ausführung nach Fig. 3 und 4 beidseitig einfassen und abdichten.

In Fig. 6a ist eine Variante zum Ausführungsbeispiel nach Fig. 5a dargestellt. Gezeigt ist ein Ausschnitt eines Fahrzeugrads mit einer sternförmigen Radscheibe 2 mit Speichen 3 aus Aluminiumlegierung und einer Radfelge 1 aus Faserverbundmaterial, verbunden durch mehrere Verbindungsanordnungen 12 und mit einer alternativen Anordnung der Dichtung 10.

Nachfolgend sollen lediglich die Unterschiede zum Ausführungsbeispiel nach Fig. 5a erläutert werden.

Bei der Ausgestaltung nach Fig. 6a ist anstelle einer ringförmigen Nut in der Anschlussfläche, insbesondere in der Kontaktfläche 7 jedes Speichenendes der sternförmigen Radscheibe 2 eine randseitige, umlaufende Ausnehmung 16 am äußeren Rand der Anschlussfläche, insbesondere in der Kontaktfläche 7 des Speichenendes und benachbart zur ersten Kontaktfläche 7.1 ausgebildet.

In diesem derart gebildeten Absatz 16 um die erste Kontaktfläche 7.1 ist eine Dichtung 10 als elastischer Dichtring oder ringförmige Dichtscheibe 10 angeordnet, die analog der Dichtungsausbildung nach Fig. 5a im Verbindungszustand auf eine definierte Form und Dicke entsprechend der sich ergebenden, ringförmig umlaufenden Fuge zwischen der zweiten Kontaktflächen (Dichtflächen) 8.2 des Anschlussbereiches der Radfelge 1 und den zweiten Kontaktflächen (Dichtflächen) 7.2 der Ausnehmung 16 in der Randzone der Anschlussfläche des Anschlussbe-Anschlussbereichs der Speichen 3 der Radscheibe 2 verpresst wird.

Auch auf diese Weise wird, wie vorbeschrieben, eine zuverlässige Dichtwirkung unter der Belastung der Verbindung gewährleistet und zugleich die Kraftübertragung zwischen der Radfelge und der Radscheibe nicht nachteilig beeinflusst.

Alternativ kann die Dichtung 10 nach Fig. 6a auch als Dichtmasse, vorzugsweise z.B. aus Silikon, ausgeführt sein. In diesem Fall kann die Abdichtung nach der Endmontage des Fahrzeugrades erfolgen, in dem die Dichtmasse 10 in die sich ergebende, ringförmig umlaufende Fuge zwischen der Anschlussfläche, insbesondere der Kontaktfläche 7 der Radfelge 1, und der Ausnehmung 16 in der Anschlussfläche der Radscheibe 2 gepresst wird und nachfolgend aushärten kann.

Durch die randseitige Ausbildung eines seitlich offenen Absatzes 16 des Speichenendes wird eine ungünstig schmale Restwandstärke des Speichenendes, welche z.B. durch eine randseitig und randnah gelegene Nut entstehen kann, umgangen und somit die Gefahr des Ausbrechens von Material aus dem Speichenende, welche die Zuverlässigkeit der Verbindung beeinträchtigen könnte, vermieden.

Diese Ausführung bietet sich insofern bei besonders platzbedürftigen Verbindungsanordnungen 12 oder sehr schlanken Speichen an, die eine besonders nah am Rand des Speichenendes gelagerte Dichtung 10 erfordern, um den Abstand zur Verbindungsanordnung 12 zu gewährleisten.

Außerdem kann eine Ausfräsung der Ausnehmung bzw. des Absatzes 16 fertigungstechnisch sehr praktikabel und damit besonders kostengünstig erfolgen.

Die Fig. 6b zeigt eine Darstellung für eine analoge Ausführung nach Fig. 6a, jedoch mit einer schüsselförmigen Radscheibe 2 unter Verwendung von zwei in jeweils einer um den Anschlussbereich des Radkranzes der Radscheibe 2 radial umlaufenden, randseitigen Ausnehmung 16', 16" angeordneten Dichtungen 10', 10'' gemäß Fig. 3 und 4, welche sämtliche Verbindungsanordnungen 12 analog der Ausführung nach Fig. 3 und 4 beidseitig einfassend abdichten.

Hierbei ist in der Randzone der radial umlaufenden Anschlussfläche, insbesondere in der Randzone der radial umlaufenden Kontaktfläche 7 des Radkranzes der schüsselförmigen Radscheibe 2 und benachbart zur radial umlaufenden ersten Kontaktfläche 7.1 beidseitig je ein Absatz 16', 16'' mit entsprechenden radial umlaufenden zweiten Kontaktflächen 7.2 ausgebildet, in dem die Dichtungen 10', 10'' angeordnet sind.

Damit kann auch hier gegenüber einer Nutausbildung mit schmaler Restwandstärke in der umlaufenden Anschlussfläche / Kontaktfläche 7 des Radkranzes der schüsselförmigen Radscheibe 2 die Gefahr des Wegbrechens von Material im Randbereich der umlaufenden Anschlussfläche /Kontaktfläche 7 des Radkranzes der schüsselförmigen Radscheibe 2 vermieden werden.

Fig. 7 zeigt ein Fahrzeugrad mit einer schüsselförmigen Radscheibe 2 aus Aluminiumlegierung und einer Radfelge 1 aus Faserverbundmaterial gemäß dem Ausführungsbeispiel nach Fig. 5b und 6b, die analog dieser Ausführungsbeispiele mittels mehrerer um den Umfang der Radfelge 1 angeordneter Verbindungsanordnungen 12 verbunden sind, die jeweils aus einer Schraube 4 und einer einteiligen Buchse 13 bestehen.

Nachfolgend werden lediglich die Unterschiede zur Ausführung nach Fig. 5b, 6b beschrieben.

Bei der Ausführung nach Fig. 7 befinden sich im Anschlussbereich der Radfelge 1 zwei radial umlaufende Nuten 9', 9'', die beidseitig der Durchgänge 5 der Radfelge 1 und beabstandet zu diesen in der Anschlussfläche, insbesondere in der Kontaktfläche 8 des Anschlussbereiches der Radfelge 1 eingearbeitet sind.

In diesen beiden Nuten 9', 9" sind die Dichtungen 10', 10'' angeordnet.

Im Sinne der Erfindung ist auch bei dieser Ausführung die in der Anschlussfläche / Kontaktfläche 8 eingearbeiteten umlaufenden Nuten 9', 9" derart von den Durchgänge 5 der Radfelge 1 beabstandet, dass die einliegenden Dichtungen 10', 10'' die jeweils einen Durchgang 5 auskleidenden Buchsen 13 nicht kontaktieren.

Auch hierdurch fassen die Dichtungen 10', 10'' sämtliche Verbindungsanordnungen 12 des Rades beidseitig und in einem kontaktfreien Abstand ein.

Das Wirkprinzip der Kraftübertragung der Verbindung vom Verbindungselement 4 über die Kontaktflächen 7.1, 8.1, 15 der Anschlussbereiche der Speichen 3 der Radscheibe 2 und der Radfelge 1 sowie die Dichtwirkung über die Dichtflächen 7.2, 8.2 durch die in den umlaufenden Nuten 9', 9" befindlichen, übermaßigen Dichtungen 10', 10'' erfolgt analog der Beschreibung nach Fig. 5a, 5b und 6a, 6b bzw. nach Fig. 3 und 4.

Es ist denkbar und von der Erfindung umfasst, dass sich alternativ zur vorstehend beschriebenen Ausführung nach Fig. 7 im Anschlussbereich der Radfelge 1 um jeweils einen Durchgang 5 der Radfelge 1 beabstandet eine ringförmige Nut 9 in der Anschlussfläche / Kontaktfläche 8 der Radfelge 1 eingearbeitet ist, in der jeweils die Dichtung 10 angeordnet ist.

Damit ist jede Verbindungsanordnung 12 für sich durch jeweils eine Dichtung 10 eingefasst und abgedichtet.

Es ist im Weiteren denkbar und von der Erfindung umfasst, dass die vorstehende Ausführung nach Fig. 7 alternativ auch für ein Fahrzeugrad mit einer sternförmigen Radscheibe 2 mit Speichen 3 und einer Radfelge 1 analog dem Ausführungsbeispiel nach Fig. 5a und 6a ausgebildet sein kann, wobei beabstandet um jeweils einen Durchgang 5 der Radfelge 1 eine ringförmige Nut 9 in den einzelnen, zu den Anschlussflächen der Speichenenden 3 der Radscheibe 2 korrespondierenden Anschlussflächen / Kontaktflächen 8 der Radfelge 1 eingearbeitet ist, in der jeweils eine Dichtung 10 angeordnet ist.

Die Fig. 8 zeigt ein Fahrzeugrad mit einer sternförmigen Radscheibe 2 mit Speichen 3 aus Aluminiumlegierung und einer Radfelge 1 aus Faserverbundmaterial, die ähnlich dem Ausführungsbeispiel nach Fig. 5a und 6a mittels mehrerer, entsprechend der Speichenanzahl um den Umfang der Radfelge 1 angeordneter Verbindungsanordnungen 12 verbunden sind.

Nachfolgend werden lediglich die Unterschiede zur Ausführung nach Fig. 5a bzw. 6a erläutert.

Die kraftschlüssige Verbindung zwischen der Radfelge 1 und der Radscheibe 2 erfolgt bei der Ausführung nach Fig. 8 im Unterschied zur den Ausführungen nach 5a und 6a durch Verbindungsanordnungen 12, die jeweils eine Schraube 4 als Verbindungselement 4 und eine mehrteilige Buchse 13 mit zwei ineinandergreifende Buchsenteilen 13.1, 13.2 aufweisen. Die Buchsenteile 13.1, 13.2 können aus verschiedenem Material ausgebildet sein, bestehen jedoch im Ausführungsbeispiel beide aus Titanlegierung.

Das erste Buchsenteil 13.1 fasst den Durchgang 5 der Radfelge 1 ein und weist einen Überstand über der Anschlussfläche, insbesondere über den Kontaktflächen 8.1, 8.2 des Anschlussbereichs der Radfelge 1 auf. Ein zweites, lochscheibenförmiges Buchsenteil 13.2 umschließt ringförmig das erste Buchsenteil 13.1 im Bereich des Überstandes und ist somit im montierten Zustand des Fahrzeugrades zwischen der ersten Kontaktfläche 8.1 des Anschlussbereichs der Radfelge 1 und der ersten Kontaktfläche 7.1 des Anschlussbereichs der Speichen 3 der Radscheibe 2 gelagert. Das Verbindungselement 4 ist durch das erste Buchsenteil 13.1 geführt und greift in das Innengewinde des Fügeganges 6 in der Radscheibe 2 ein, wobei ein Schraubenkopf 14 des Verbindungselement 4 in dem konisch geweiteten Rand des ersten Buchsenteils 13.1 sitzt.

Der Kraftfluss der Verbindung nach Fig. 8 erfolgt vornehmlich über das Verbindungselement 4 und die Buchsenteile 13.1 , 13.2 auf die Radfelge 1 und die Radscheibe 2 , wobei eine stirnseitige Kontaktfläche 15.1 des ersten Buchsenteils 13.1 unmittelbar mit der ersten Kontaktfläche 7.1 des Anschlussbereiches der Speichen 3 in Kontakt steht und die beidseitigen Kontaktflächen 15.2 des zweiten Buchsenteils 13.2 jeweils mit der ersten Kontaktfläche 8.1 des Anschlussbereiches der Radfelge 1 und mit der ersten Kontaktfläche 7.1 des Anschlussbereichs der Speichen 3 der Radscheibe 2 unmittelbar in Kontakt stehen.

Bei diesem Ausführungsbeispiel stehen die Radscheibe 2 und die Radfelge 1 über die erste Kontaktfläche 7.1 des Anschlussbereiches der Speichen 3 und die erste Kontaktfläche 8.1 des Anschlussbereiches der Radfelge 1 mittelbar, nämlich über das erste Buchsenteil 13.1 und das zweite Buchsenteil 13.2 der Verbindungsanordnung 12, in Kontakt.

Infolge der Zwischenlagerung des zweiten Buchsenteils 13.2 zwischen den ersten Kontaktflächen 7.1, 8.1 ergibt sich um den äußeren Rand des zweiten, lochscheibenförmigen Buchenteils 13.2 eine Fuge zwischen der freibleibenden Anschlussfläche / Kontaktfläche 8 des Anschlussbereichs der Radfelge 1 und der freibleibenden Anschlussfläche / Kontaktfläche 7 der Speichenenden der Radscheibe 2.

Diese sich bildende Fuge ist für die Anordnung der Dichtung 10, z.B. einem übermaßlichen Dichtring oder einer Dichtmasse nutzbar, die im Montagezustand an den Dichtflächen 7.2, 8.2 der Radscheibe 2 bzw. der Radfelge 1 anliegt, wobei entsprechend der vorstehenden Ausführungen eine zuverlässige Dichtwirkung unter der Belastung der Verbindung gewährleistet wird und die Kraftübertragung zwischen Radfelge 1 und Radscheibe 2 unbeeinflusst bleibt.

Die gesamte Verbindungsanordnung 12 befindet sich durch die erfindungsgemäße Anordnung der Dichtung 10 vollständig im Überdruckbereich der Reifenkammer 11, so dass die an der Verbindung beteiligten Teile 4, 13.1, 13.2 der Verbindungsanordnung 12 nicht separat abgedichtet werden müssen.

Erfindungsgemäß ist die Dichtung 10 so ausgebildet und angeordnet, dass sie einen radialen Abstand zum Umfang des lochscheibenförmigen, zweiten Buchenteil 13.2 aufweist, so dass die Dichtung 10 zudem weitestgehend unbeeinflusst von den Mikrobewegungen der Verbindungsanordnung 12 bleibt.

Diese Ausführung der Verbindungsanordnung 12 nach Fig. 8 verbessert zum einen die Kompensation der auftretenden Mikrobewegungen in der Verbindung. Durch die mehrteilige Buchse mit den Buchsenteile 13.1, 13.2 kann der aus den Mikrobewegungen zwischen Radscheibe 2 und Radfelge 1 resultierende Schwingreibverschleiß des Faserverbundmaterials der Radfelge 1 ohne Minderung der Dichtwirkung weiter reduziert werden. Damit wird die Zuverlässigkeit der Verbindung von einer Radscheibe 2 mit einer Radfelge 1 insbesondere aus Faser-Faserverbundmaterial weiter erhöht.

Zum anderen minimiert die Geometrie der felgeninnenseitig überstehenden zweiteiligen Buchse 13.1, 13.2 die notwendigen Vorkehrungen für die Platzierung und Fixierung der Dichtung 10 zwischen den Anschlussflächen / Kontaktflächen 7, 8 der Radfelge 1 und der Radscheibe 2. Es müssen vor allem keine Nuten, Absätze oder Ausnehmungen zur Lagesicherung der Dichtung 10 in den Anschlussflächen / Kontaktflächen 7, 8 vorgesehen werden, was zum einen die Herstellung der dichtenden Verbindung des Fahrzeugrades vereinfacht und kostengünstiger ermöglicht und zum anderen eine lokale Schwächung der Radfelge 1 insbesondere aus Faserverbundmaterial und der Radscheibe 2 vermeidet.

Die Fig. 9 zeigt ein Fahrzeugrad mit einer sternförmigen Radscheibe 2 mit Speichen 3 aus Aluminiumlegierung und einer Radfelge 1 aus Faserverbundmaterial ähnlich dem Ausführungsbeispiel nach Fig. 8.

Bei der Ausführung nach Fig. 9 erfolgt die kraftschlüssige Verbindung zwischen der Radfelge 1 und der Radscheibe 2 durch mehrere, entsprechend der Speichenanzahl um den Umfang des Fahrzeugrades angeordnete Verbindungsanordnungen 12, die jeweils eine Schraube 4 als Verbindungselement 4 und eine den Durchgang 5 einfassenden und über die Anschlussfläche und insbesondere über die Kontaktflächen 8.1, 8.2 der Radfelge 1 überstehenden Buchse 13.1, analog dem ersten Buchsenteil 13.1 in der Ausführung nach Fig. 8, und weiter eine zum Buchsenteil 13.1 separat angeordneten Lochscheibe 17 umfassen.

Buchse 13.1 und Lochscheibe 17 bestehen beispielsweise aus einer Titanlegierung.

Die Lochscheibe 17 ist im montierten Zustand des Fahrzeugrades zwischen der Anschlussfläche / Kontaktfläche 8 des Anschlussbereichs der Radfelge 1 und der Anschlussfläche / Kontaktfläche 7 des Anschlussbereichs der Speichen 3 der Radscheibe 2 gelagert, wobei die Lochscheibe 17 den Durchgang 5 der Radfelge 1 weiträumig umgibt. Die Lochscheibe 17 weist einen abgewinkelten Rand auf, der den Randbereich der Anschlussfläche des Speichenendes 3 der Radscheibe 2 einfasst und zugleich die Lochscheibe 17 in ihrer Lage fixiert.

Das Verbindungselement 4 ist durch das Buchsenteil 13.1 geführt und greift in das Innengewinde des Fügeganges 6 in der Radscheibe 2 ein, wobei ein Schraubenkopf 14 in dem konisch geweiteten Rand des Buchsenteils 13.1 sitzt.

Der Kraftfluss der Verbindung erfolgt hier vornehmlich über das Verbindungselement 4, das Buchsenteil 13.1 und die Lochscheibe 17 auf die Radfelge 1 und die Radscheibe 2, wobei die stirnseitige Kontaktfläche 15.1 des Buchsenteils 13.1 unmittelbar mit der ersten Kontaktfläche 7.1 des Anschlussbereiches der Speichen 3 in Kontakt steht und die beidseitigen Kontaktflächen 18 der Lochscheibe 17 jeweils mit der ersten Kontaktfläche 7.1 der Speichen 3 der Radscheibe 2 und mit der ersten Kontaktfläche 8.1 der Radfelge 1 unmittelbaren Kontakt stehen.

Auch bei diesem Ausführungsbeispiel stehen die Radscheibe 2 und die Radfelge 1 über die erste Kontaktfläche 7.1 des Anschlussbereiches der Speichen 3 und die erste Kontaktfläche 8.1 des Anschlussbereiches der Radfelge 1 mittelbar, nämlich über das Buchsenteil 13.1 und die Lochscheibe 17 der Verbindungsanordnung 12, in Kontakt.

Die Lochscheibe 17 ist so ausgebildet und angeordnet, dass im montierten Zustand innenseitig (lochseitig) ein ringförmiger Hohlraum gebildet wird, der von einem freibleibenden Abschnitt der Anschlussfläche / Kontaktfläche 8 des Anschlussbereichs der Radfelge 1, einem freibleibenden Abschnitt der Anschlussfläche / Kontaktfläche 7 des Anschlussbereichs der Speichen 3 der Radscheibe 2 und einer Umfangsfläche des Buchsenteils 13.1 begrenzt ist.

Dieser Hohlraum ist für die Anordnung der Dichtung 10, insbesondere als Dichtring oder ringförmige Dichtscheibe nutzbar.

Die Dichtung 10 ist im Montagezustand in dem Hohlraum spielbehaftet / beabstandet zwischen der Außenwand / äußere Umfangsfläche der Buchse 13.1 und der Innenwand der Lochscheibe 17 eingelagert und dichtet entsprechend der zuverlässigen Dichtweise gemäß den vorstehenden Ausführungen die Reifenkammer 11 der Radfelge 1 in einem kontaktfreien und schädigungsfreien Abstand zur Verbindungsanordnung 12 ab.

Bei der Ausführung nach Fig. 9 befindet sich nicht die gesamte Verbindungsanordnung 12, sondern neben dem Verbindungselement 4 nur das Buchsenteil 13.1 der Verbindungsanordnung 12 im Überdruckbereich der Reifenkammer 11, wobei die Dichtung 10 von einem weiteren Bestandteil der Verbindungsanordnung (Lochscheibe 17) eingefasst angeordnet ist.

Damit ist einerseits eine sichere Abdichtung der Reifenkammer 11 der Radfelge 1 gewährleistet und andererseits ein zusätzlicher Schutz der Dichtung 10 vor äußeren schädigenden Einflüssen der Umgebung gegeben.

Gemäß der Erfindung ist die eingelagerte Dichtung 10 derart ausgebildet und angeordnet, dass diese einerseits die Außenwand / äußere Umfangsfläche der Buchse 13.1 beabstandet umgibt und andererseits beabstandet zur Innenwand der Lochscheibe 17 angeordnet ist.

Damit befindet sich die eingelagerte Dichtung 10 in einem kontaktfreien, schädigungsfreien Abstand zur Verbindungsanordnung 12 und wird in ihrer eingefassten Anordnung zudem vor äußeren schädigenden Einflüssen der Umgebung schützt.

Auch bei der vorstehenden Ausführung nach Fig. 9 sind Nuten, Absätze oder Ausnehmungen zur Lagesicherung der Dichtung 10 in den Anschlussflächen / Kontaktflächen 7, 8 der Radfelge 1 bzw. der Radscheibe 2 entbehrlich, was zum einen die Herstellung der dichtenden Verbindung des Fahrzeugrades einfacher und kostengünstiger macht und zum anderen eine lokale Schwächung der Radfelge 1 und der Radscheibe 2 vermeidet.

Nicht zuletzt kann die äußerlich (von außen) sichtbare Lochscheibe 17 der Verbindungsanordnung 12 zur Gestaltung des Fahrzeugrades genutzt werden.

Die Ausführung nach Fig. 9 ist auch als eine Ausführung mit einer schüsselförmigen Radscheibe 2 unter Verwendung von einer oder mehrerer um den Umfang des Radkranzes der Radscheibe 2 umlaufenden und den Radkranz einfassenden Lochplatten (Lochblechbänder) denkbar (nicht dargestellt).

Eine im ganzen / einteilig ausgebildete Lochplatte (nicht dargestellt) kann radial bandförmig mit entsprechenden Lochausnehmungen um den Umfang des Radkranzes umlaufend ausgebildet sein, um im Montagezustand die Durchführungen der Verbindungselemente 4 bzw. der Verbindungsanordnungen 12 und deren Dichtungen (Dichtringe) 10 jeweils beabstandet zu umgeben.

Mehrere Lochplatten können beispielsweise zweigeteilt beidseitig des Radkranzes der Radscheibe 2 angeordnet sein und radial bandförmig mit einer gleichbleibenden oder unterschiedlichen Bandbreite oder mit entsprechenden Ausnehmungen um den Umfang des Radkranzes umlaufend ausgebildet sein, um so im Montagezustand die Durchführungen der Verbindungselemente 4 bzw. der Verbindungsanordnungen 12 und deren Dichtungen (Dichtringe oder radial umlaufende Dichtung) 10 jeweils beabstandet zu umgeben. Die beiden geteilten Lochplatten können so ausgebildet sein, dass sie in den an den Dichtungen (Dichtringe) 10 angrenzenden Zwischenräumen aneinander anliegen.

Auch diese Ausführungen können die Dichtringe 10 vollständig und spielbehaftet einschließen, welche wiederum sämtliche Verbindungselemente 4 bzw. Verbindungsanordnungen 12 spielbehaftet und vollständig dichtend einfassen.

Die derartige Ausführungen und Anordnungen der Lochplatte bzw. Lochplatten schützen die Dichtringe 10 ebenfalls vor äußeren, schädigenden Einflüssen der Umgebung.

Die Fig. 10 zeigt ein Fahrzeugrad mit einer sternförmigen Radscheibe 2 mit Speichen 3 aus Aluminiumlegierung, beispielsweise EN AW-6082, und einer Radfelge 1 aus Faserverbundmaterial, beispielsweise CFK mit Epoxidharzmatrix, die analog dem Ausführungsbeispiel nach Fig. 6a mittels mehrerer, entsprechend der Speichenanzahl um den Umfang der Radfelge 1 angeordneter Verbindungsanordnungen 12 verbunden sind.

Nachfolgend werden lediglich die Unterschiede zur Ausführung nach Fig. 6a erörtert.

Die Dichtung 10 ist in der ringförmig umlaufenden Fuge zwischen den zweiten Kontaktflächen (Dichtflächen) 8.2 des Anschlussbereiches der Radfelge 1 und den zweiten Kontaktflächen (Dichtflächen) 7.2 der Ausnehmung 16 in der Randzone der Anschlussfläche des Anschlussbereichs der Speichen 3 der Radscheibe 2 angeordnet.

Die radfelgeninnenseitige Oberfläche der Radfelge 1 und die Oberfläche der Speichen 3 der Radscheibe 2 sind jeweils mit einer Beschichtung 19 / Lackschicht 19, beispielsweise auf der Basis eines Zwei-Komponenten Acryllacksystems, bedeckt, die vornehmlich dem mechanischem Schutz und der Dichtigkeit der Radfelge 1 aus Faserverbundmaterial und der Radscheibe 2 aus Aluminium dienen. Die Beschichtung 19 kann mehrschichtig aus einzelnen Lackschichten 19 aufgebaut sein.

Diese Beschichtung 19 / Lackschicht 19 bedeckt zusätzlich die zweite Kontaktfläche (Dichtfläche) 8.2 des Anschlussbereiches der Radfelge 1 und die zweiten Kontaktflächen (Dichtflächen) 7.2 der Ausnehmung 16 vollständig, so dass die Beschichtung / Lackschicht 19 zwischen der Dichtung 10 und den jeweiligen zweiten Kontaktflächen 7.2 und 8.2 angeordnet ist.

Mit dieser Beschichtung 19 / Lackschicht 19 wird verhindert, dass Feuchtigkeit von außen und über die Grenzbereiche zwischen der Dichtung 10 und den Dichtfläche(n) 7.2, 8.2 in die Verbindung zwischen Radfelge 1 und Radscheibe 2 und in die Verbindungsanordnung 12 eindringt, womit Korrosionserscheinungen aufgrund der verwendeten Materialkombinationen zwischen Radfelge 1, Radscheibe 2 und Verbindungsanordnung 12 vermieden werden können.

Explizit weisen die ersten, kraftübertragenden Kontaktflächen 7.1, 8.1 im Anschlussbereich der Radscheibe 2 und der Radfelge 1 keine Beschichtung 19 auf, so dass vermieden ist, dass sich Beschichtungsmaterial im Kraftfluss der Verbindung befindet, um die Wirksamkeit der Kraftübertragung zur Sicherung der hohen Verbindungsqualität nicht zu beeinträchtigen.

Diese Ausführung der Beschichtung 19 kann auch bei allen vorstehend beschriebenen Ausführungsbeispielen Anwendung finden.

Die Fig. 11 zeigt ein Fahrzeugrad mit einer sternförmigen Radscheibe 2 mit Speichen 3 aus Aluminiumlegierung und einer Radfelge 1 aus Faserverbundmaterial, die ähnlich dem Ausführungsbeispiel nach Fig. 8 mittels mehrerer, entsprechend der Speichenanzahl um den Umfang der Radfelge 1 angeordneter Verbindungsanordnungen 12 verbunden sind.

Nachfolgend werden lediglich die Unterschiede zur Ausführung nach Fig. 8 erläutert.

Die Verbindungsanordnungen 12 zur kraftschlüssigen Verbindung zwischen der Radfelge 1 und der Radscheibe 2 weisen jeweils eine Schraube 4 als Verbindungselement 4 und eine mehrteilige Langbuchse 20 mit zwei ineinandergreifenden Buchsenteilen 20.1, 13.2 auf. Die mehrteilige Langbuchse 20 besteht aus einem ersten Langbuchsenteil 20.1, welches den Durchgang 5 der Radfelge 1 einfasst und das Verbindungselement 4 koaxial umschließt, und aus einem zweiten, lochscheibenförmigen Langbuchsenteil 20.2, welches das erste Langbuchsenteil 20.1 ringförmig umschließt.

Das Verbindungselement 4 ist durch das erste Langbuchsenteil 20.1 geführt und greift in das Innengewinde des Fügeganges 6 in der Radscheibe 2 ein, wobei der Schraubenkopf 14 in dem konisch geweiteten Rand des Langbuchsenteils 20.1 sitzt.

Das zweite, lochscheibenförmige Langbuchsenteil 20.2 ist im montierten Zustand des Fahrzeugrades zwischen der ersten Kontaktfläche 8.1 des Anschlussbereichs der Radfelge 1 und der ersten Kontaktfläche 7.1 des Anschlussbereichs der Speichenenden 3 der Radscheibe 2 gelagert.

Der Schaft des ersten Langbuchsenteils 20.1 weist im Montagezustand des Fahrzeugrades einen deutlichen Überstand über den Kontaktflächen 8.1, 8.2 des Anschlussbereichs der Radfelge 1 und über dem zweiten, lochscheibenförmigen Langbuchsenteil 20.2 auf, wobei der Schaft des ersten Langbuchsenteils 20.1 sich in eine mit der Gestalt des Schafts korrespondierende Ausnehmung des Fügegangs 6 der Speiche 3 der Radscheibe 2 erstreckt, so dass das Langbuchsenteil 20.1 formschlüssig mit der Radscheibe 2 verbunden ist.

In der sich durch die Zwischenlagerung des zweiten Langbuchsenteils 20.2 zwischen den Kontaktflächen 7.1, 8.1 bildende Fuge zwischen dem Anschlussbereich der Radfelge 1 und der Speichenenden 3 ist die Dichtung 10, z.B. einem übermaßlichen Dichtring oder einer Dichtmasse, anordenbar, wobei diese so ausgebildet und angeordnet, dass sie einen radialen Abstand zum Umfang des zweiten Langbuchsenteil 20.2 einhält. In der Weise bleibt die Dichtung von der Kraftübertragung und dynamischen Mikrobewegungen zwischen Radfelge 1 und Radscheibe 2 weitestgehend unbeeinflusst und gewährleistet damit eine zuverlässige Dichtwirkung.

Mit dieser Ausführung der Verbindungsanordnung 12 mittels der mehrteiligen Langbuchse 20 erfolgt eine besonders effiziente Differenzierung der Kraftübertragung über die Verbindung, in dem die Schraube 4 als Verbindungselement selektiv die Übertragung der Längs- bzw. Zugkräfte in axialer Richtung übernimmt und das koaxial umgebende Langbuchsenteil 20.1 die Aufnahme von Querkräften und Biegemomenten in radialer Richtung realisiert.

Im Unterschied zu Fig. 8, wo die Querkräfte und Biegemomente in radialer Richtung durch den aus der Schraubenvorspannung resultierenden Reibschluss übertragen werden, ergibt sich durch die formschlüssige Einbettung des ersten Langbuchsenteils 20.1 in der Speiche 3 eine deutlich steifere und spielfreie Verbindung zwischen Radfelge 1 und Radscheibe 2. Dadurch können die dynamischen Mikrobewegungen zwischen Radfelge 1 und Radscheibe 2 weiter reduziert werden, wodurch der Einfluss dieser Mikrobewegungen auf die Dichtung 10 weiter sinkt und damit die Dichtwirkung weiter verbessert werden kann.

Von der Erfindung sind selbstverständlich auch Ausführungen von Verbindungsanordnungen 12 umfasst, welche eine einteilige Langbuchse 20 aufweisen, die beispielsweise nur aus dem ersten Langbuchsenteil 20.1 besteht. Diese könnten mit selbigen vorbeschriebenen vorteilhaften Effekten z.B. alternativ zu der Buchse 13 in den Ausführungen nach Fig. 5a, 5b, 6a, 6b und 7 angewandt werden.

Der in den Ansprüchen verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.

Wird beispielsweise eine Beziehung beschrieben, die die Komponenten A, B und/oder C, enthält, kann die mögliche Beziehung die Komponenten A alleine; B alleine; C alleine; A und B in Kombination; A und C in Kombination; B und C in Kombination; oder A, B, und C in Kombination enthalten.

### Bezugszeichenliste

- 1: Radfelge
- 2: Radscheibe
- 3: Speiche
- 4: Verbindungselement, Schraube
- 5: Durchgang der Radfelge
- 6: Fügegang der Radscheibe
- 7: Kontaktfläche (des Anschlussbereichs der Radscheibe)
7.1 erste Kontaktfläche,
7.2 zweite Kontaktfläche (Dichtfläche)
- 8: Kontaktfläche (des Anschlussbereichs der Radfelge)
8.1 erste Kontaktfläche,
8.2 zweite Kontaktfläche (Dichtfläche)
- 9: Nut ',"
- 10: Dichtung, Dichtring, Dichtscheibe, Dichtmasse ',"
- 11: Reifenkammer
- 12: Verbindungsanordnung
13 Buchse, Buchsenteil
13.1 erstes Buchsenteil,
13.2 zweites Buchsenteil
- 14: Schraubenkopf
- 15: Kontaktfläche (der Buchse, des Buchenteils)
15.1 Kontaktfläche des ersten Buchsenteils
15.2 Kontaktfläche des zweiten Buchsenteils
- 16: Ausnehmung, Absatz ',"
- 17: Lochscheibe
- 18: Kontaktfläche (der Lochscheibe)
- 19: Beschichtung / Lackschicht
- 20: Langbuchse
20.1 erstes Langbuchsenteil
20.2 zweites Langbuchsenteil
- 21: Kontaktfläche (der Langbuches, des Langbuchenteils)
21.1 Kontaktfläche des ersten Langbuchsenteils
21.2 Kontaktfläche des zweiten Langbuchsenteils

## Patentansprüche

1. Fahrzeugrad, welches eine Radscheibe, eine Radfelge und mehrere Verbindungselemente aufweist, welche die Radscheibe mit der Radfelge verbinden, wobei diese Verbindungselemente durch Durchgänge in der Radfelge geführt und in der Radscheibe gefügt sind und Dichtungen zur hermetischen Abdichtung der Durchgänge der Radfelge vorgesehen sind, wobei die Dichtungen (10) zwischen einem Anschlussbereich der Radscheibe (2) und einem Anschlussbereich der Radfelge (1) angeordnet sind, **dadurch gekennzeichnet, dass** die Dichtungen (10) die Verbindungselemente (4) kontaktfrei umgeben und jeweils eine Dichtung (10) als ringförmiges Dichtungselement koaxial umlaufend um jeweils ein Verbindungselement (4) angeordnet ist und wobei in Anschlussflächen des Anschlussbereichs der Radscheibe (2) und/oder in Anschlussflächen des Anschlussbereichs der Radfelge (1) Nuten (9) ausgebildet sind, in denen die Dichtungen (10) angeordnet sind.

2. Fahrzeugrad nach Anspruch 1, **dadurch gekennzeichnet, dass** die Dichtungen (10) zwischen wenigstens einer Kontaktfläche des Anschlussbereichs der Radscheibe (2) und wenigstens einer Kontaktfläche des Anschlussbereichs der Radfelge (1) angeordnet sind.

3. Fahrzeugrad nach Anspruch 1 oder 2, **dadurch gekennzeichnet, dass** ein Verbindungselement (4) jeweils Teil einer mehrteiligen Verbindungsanordnung (12) ist, wobei die Dichtungen kontaktfrei zu den Verbindungsanordnungen (12) angeordnet sind.

4. Fahrzeugrad nach einem der Ansprüche 2 bis 3, **dadurch gekennzeichnet, dass** die Dichtungen (10) derart ausgebildet und angeordnet sind, dass wenigstens eine Anschlussfläche oder ein Abschnitt einer Anschlussfläche der Radscheibe (2) und wenigstens eine Anschlussfläche oder ein Abschnitt einer Anschlussfläche der Radfelge (1) jeweils als erste Kontaktfläche (7.1, 8.1) zum unmittelbaren Kontakt der Radscheibe (2) mit der Radfelge (1) und/oder zum mittelbaren Kontakt der Radscheibe (2) und/oder der Radfelge (1) mittels einer Verbindungsanordnung (12) ausgebildet ist.

5. Fahrzeugrad nach einem der Ansprüche 2 bis 4, **dadurch gekennzeichnet, dass** wenigstens eine Anschlussfläche oder ein Abschnitt einer Anschlussfläche der Radscheibe (2) und wenigstens eine Anschlussfläche oder ein Abschnitt einer Anschlussfläche der Radfelge (1) jeweils als zweite Kontaktfläche (7.2, 8.2) zum unmittelbaren Kontakt der Dichtung(en) (10) mit der Radscheibe (2) und mit der Radfelge (1) ausgebildet ist.

6. Fahrzeugrad nach einem der Ansprüche 3 bis 5, **dadurch gekennzeichnet, dass** die Verbindungsanordnung (12) ein oder mehrere Buchsenteile (13, 13.1, 13.2) aufweist.

7. Fahrzeugrad nach einem der Ansprüche 3 bis 6, **dadurch gekennzeichnet, dass** die Verbindungsanordnung (12) eine oder mehrere Lochscheibe(n) (17) und/oder eine oder mehrere Lochplatte(n) aufweist.

8. Fahrzeugrad nach einem der Ansprüche 3 bis 7, **dadurch gekennzeichnet, dass** die Dichtungen (10) koaxial umlaufend um eine oder mehrere Verbindungsanordnung(en) (12) angeordnet ist/sind.

9. Fahrzeugrad nach einem der Ansprüche 5 bis 8, **dadurch gekennzeichnet, dass** die Dichtungen (10) stoffschlüssig mit den zweiten Kontaktflächen (7.2) des Anschlussbereichs der Radscheibe (2) und/oder mit denzweiten Kontaktflächen (Dichtflächen) (8.2) des Anschlussbereichs der Radfelge (1) verbunden sind.

10. Fahrzeugrad nach einem der Ansprüche 2 bis 9, **dadurch gekennzeichnet, dass** in einer Randzone einer Anschlussfläche, insbesondere in einer Randzone der Kontaktfläche (7) des Anschlussbereiches der Radscheibe (2) und/oder in einer Randzone einer Anschlussfläche, insbesondere in einer Randzone der Kontaktfläche (8) des Anschlussbereiches der Radfelge (1) eine Ausnehmung (16) ausgebildet ist, in der die Dichtungen (10) angeordnet sind.

11. Fahrzeugrad nach einem der Ansprüche 1 bis 10, **dadurch gekennzeichnet, dass** die Dichtungen (10) aus einer Dichtmasse gebildet ist.

12. Fahrzeugrad nach einem der Ansprüche 1 bis 11, **dadurch gekennzeichnet, dass** die Dichtungen (10) aus elastischen Material, insbesondere aus Fluor-Kautschuk oder Silikon, besteht.

13. Fahrzeugrad nach einem der vorstehenden Ansprüche 5 bis 12, **dadurch gekennzeichnet, dass** die zweiten Kontaktflächen (Dichtflächen) (7.2) des Anschlussbereichs der Radscheibe (2) und/oder die zweiten Kontaktflächen (Dichtflächen) (8.2) des Anschlussbereichs der Radfelge (1) eine fluiddichte Beschichtung (19) aufweist.

14. Fahrzeugrad nach einem der Ansprüche 3 bis 13, **dadurch gekennzeichnet, dass** die Verbindungsanordnung (12) ein oder mehrere Langbuchsenteile (20, 20.1, 20.2) aufweist.

## Claims

1. Vehicle wheel which has a wheel disc, a wheel rim and a plurality of connecting elements which connect the wheel disc to the wheel rim, these connecting elements being guided through passages in the wheel rim and being joined in the wheel disc, and seals being provided for hermetically sealing the passages in the wheel rim, F wherein J Z the seals (10) are arranged between a connection region of the wheel disc (2) and a connection region of the wheel rim (1), F **characterized in that** J the seals (10) surround the connecting elements (4) without contact and in each case one seal (10) is arranged as an annular sealing element coaxially circumferentially around a respective connecting element (4) and wherein grooves (9), in which the seals (10) are arranged, are formed in connecting surfaces of the connecting region of the wheel disc (2) and/or in connecting surfaces of the connecting region of the wheel rim (1).

2. Vehicle wheel according to claim 1, **characterized in that** the seals (10) are arranged between at least one contact surface of the connection region of the wheel disc (2) and at least one contact surface of the connection region of the wheel rim (1).

3. Vehicle wheel according to claim 1 or 2, **characterized in that** a connecting element (4) is in each case part of a multi-part connecting arrangement (12), the seals being arranged without contact with the connecting arrangements (12).

4. Vehicle wheel according to one of the claims 2 to 3, **characterized in that** the seals (19) are designed and arranged in such a way that at least one connecting surface or a section of a connecting surface of the wheel disc (2) and at least one connecting surface or a section of a connecting surface of the wheel rim (1) are each designed as a first contact surface (7.1, 8.1) for direct contact of the wheel disc 82) with the wheel rim (1) and/or the wheel rim (1) by means of a connecting arrangement (12).

5. Vehicle wheel according to one of the claims 2 to 4, **characterized in that** at least one connecting surface or a section of a connecting surface of the wheel disc (2) and at least one connecting surface or a section of a connecting surface of the wheel rim (1) are each designed as a second contact surface (7.2, 8.2) for direct contact of the seal(s) (10) with the wheel disc (2) and with the wheel rim (1).

6. Vehicle wheel according to one of the claims 3 to 5, **characterized in that** the connecting arrangement (12) has one or more bushing parts (13, 13.1, 13.2).

7. Vehicle wheel according to one of the claims 3 to 6, **characterized in that** the connecting arrangement (12) comprises one or more perforated disc(s) (17) and/or one or more perforated plate(s).

8. Vehicle wheel according to one of the claims 3 to 7, **characterized in that** the seals (10) are arranged coaxially circumferentially around one or more connecting arrangement(s) (12).

9. Vehicle wheel according to one of the claims 5 to 8, **characterized in that** the seals (10) are bonded to the second contact surfaces (7.2) of the connecting region of the wheel disc (2) and/or to the second contact surfaces (sealing surfaces) (8.2) of the connection region of the wheel rim (1).

10. Vehicle wheel according to one of the claims 2 to 9, **characterized in that** in an edge zone (16) of a connection surface, in particular in an edge zone of the contact surface (7) of the connecting region of the wheel disc (2) and/or in an edge zone of a connecting surface, in particular in an edge zone of the contact surface (8) of the connecting region of the wheel rim (1), a recess (16) is formed in which the seals (10) are arranged.

11. Vehicle wheel according to one of the claims 1 to 10, **characterized in that** the seals (10) are formed from a sealing compound.

12. Vehicle wheel according to one of the claims 1 to 11, **characterized in that** the seals (10) are made of elastic material, in particular of fluorine rubber or silicone.

13. Vehicle wheel to one of the preceding claims 5 to 12, **characterized in that** the second contact surfaces (sealing surfaces) (7.2) of the connecting region of the wheel disc (2) and/or the second contact surfaces (sealing surfaces) (8.2) of the connecting region of the wheel rim (1) have a fluid-tight coating (19).

14. Vehicle wheel according to one of the claims 3 to 13, **characterized in that** the connecting arrangement (12) comprises one or more long bushing parts (20, 20.1, 20.2).

## Revendications

1. Roue de véhicule comprenant un disque de roue, une jante de roue et plusieurs éléments de liaison qui relient le disque de roue à la jante de roue, ces éléments de liaison étant guidés à travers des passages dans la jante de roue et assemblés dans le disque de roue, et des joints d'étanchéité étant prévus pour assurer l'étanchéité hermétique des passages de la jante de roue, les joints d'étanchéité (10) sont disposés entre une zone de raccordement du disque de roue (2) et une zone de raccordement de la jante de roue (1), **caractérisée en ce que** les joints d'étanchéité (10) entourent les éléments de liaison (4) sans contact et que chaque joint d'étanchéité (10) est disposé sous la forme d'un élément d'étanchéité annulaire de manière coaxiale autour d'un élément de liaison (4) respectivement et dans lequel des rainures (9) sont formées dans les surfaces de raccordement de la zone de raccordement du disque de roue (2) et/ou dans les surfaces de raccordement de la zone de raccordement de la jante de roue (1) dans lesquelles sont disposés les joints d'étanchéité (10).

2. Roue de véhicule selon la revendication 1, **caractérisée en ce que** les joints d'étanchéité (10) sont disposés entre au moins une surface de contact de la zone de raccordement du disque de roue (2) et au moins une surface de contact de la zone de raccordement de la jante de roue (1).

3. Roue de véhicule selon la revendication 1 ou 2, **caractérisée en ce qu'**un élément de liaison (4) fait partie d'un agencement de liaison en plusieurs parties (12), les joints étant disposés sans contact avec les agencements de liaison (12).

4. Roue de véhicule selon l'une des revendications 2 à 3, **caractérisée en ce que** les joints d'étanchéité (10) sont conçus et disposés de telle sorte qu'au moins une surface de raccordement ou une partie d'une surface de raccordement du disque de roue (2) et au moins une surface de raccordement ou une partie d'une surface de raccordement de la jante de roue (1) sont respectivement conçues comme première surface de contact (7.1, 8.1) pour le contact direct du disque de roue (2) avec la jante de roue (1) et/ou pour le contact indirect du disque de roue (2) et/ou de la jante de roue (1) au moyen d'un agencement de liaison (12).

5. Roue de véhicule selon l'une des revendications 2 à 4, **caractérisée en ce qu'**au moins une surface de raccordement ou une partie d'une surface de raccordement du disque de roue (2) et au moins une surface de raccordement ou une partie d'une surface de raccordement de la jante de roue (1) sont chacune conçues comme une deuxième surface de contact (7.2, 8.2) pour le contact direct du joint (10) avec le disque de roue (2) et avec la jante de roue (1).

6. Roue de véhicule selon l'une des revendications 3 à 5, **caractérisée en ce que** l'agencement de liaison (12) comporte une ou plusieurs pièces de douille (13, 13.1, 13.2).

7. Roue de véhicule selon l'une des revendications 3 à 6, **caractérisée en ce que** l'agencement de liaison (12) comprend un ou plusieurs disques perforés (17) et/ou une ou plusieurs plaques perforées.

8. Roue de véhicule selon l'une des revendications 3 à 7, **caractérisée en ce que** les joints d'étanchéité (10) sont disposés de manière coaxiale autour d'un ou plusieurs agencements de liaison (12).

9. Roue de véhicule selon l'une des revendications 5 à 8, **caractérisée en ce que** les joints d'étanchéité (10) sont reliés par adhérence de matière aux deuxièmes surfaces de contact (7.2) de la zone de raccordement du disque de roue (2) et/ou aux deuxièmes surfaces de contact (surfaces d'étanchéité) (8.2) de la zone de raccordement de la jante de roue (1).

10. Roue de véhicule selon l'une des revendications 2 à 9, **caractérisée en ce que,** dans une zone périphérique d'une surface de raccordement, en particulier dans une zone périphérique de la surface de contact (7) de la zone de raccordement du disque de roue (2) et/ou dans une zone périphérique d'une surface de raccordement, en particulier dans une zone périphérique de la surface de contact (8) de la zone de raccordement de la jante de roue (1), il est formé un évidement (16) dans lequel sont disposés les joints d'étanchéité (10).

11. Roue de véhicule selon l'une des revendications 1 à 10, **caractérisée en ce que** les joints d'étanchéité (10) sont formés d'une masse d'étanchéité.

12. Roue de véhicule selon l'une des revendications 1 à 11, **caractérisée en ce que** les joints d'étanchéité (10) sont constitués d'un matériau élastique, en particulier de caoutchouc fluoré ou de silicone.

13. Roue de véhicule selon l'une des revendications 5 à 12 ci-dessus, **caractérisée en ce que** les deuxièmes surfaces de contact (surfaces d'étanchéité) (7.2) de la zone de raccordement du disque de roue (2) et/ou les deuxièmes surfaces de contact (surfaces d'étanchéité) (8.2) de la zone de raccordement de la jante de roue (1) présente un revêtement étanche aux fluides (19).

14. Roue de véhicule selon l'une des revendications 3 à 13, **caractérisée en ce que** l'agencement de liaison (12) comporte une ou plusieurs pièces de douille allongées (20, 20.1, 20.2).
